# EUROPEAN PATENT APPLICATION

(11) **EP 2 677 414 A2**
(43) Date of publication of application: **25.12.2013**
(21) Application number: 13172562.4
(22) Date of filing: 18.06.2013
(51) Int. Cl.: G06F 3/0488

(54) **Information display apparatus and method of user device**

(30) Priority: 20.06.2012 KR 20120066326
(71) Applicant: Samsung Electronics Co., Ltd, Gyeonggi-do 443-742 (KR)
(72) Inventor: Jeong, Jinhong, 443-742 Gyeonggi-do (KR)
(74) Representative: Nederlandsch Octrooibureau

(57) **Abstract**

Apparatus and methods for displaying information are disclosed herein. In various embodiments, a method may comprise providing information via a display. An input may be detected. A position where the input is detected may be set as a reference position. The setting may include dividing the information into a plurality of portions including a first portion and second portion. At least one of the first portion or the second portion may be moved toward the reference position. Other various embodiments are possible.

## Description

### TECHNICAL FIELD

Various embodiments disclosed herein relate generally to an information display apparatus and method of a user device.

### BACKGROUND

A user device having a touch panel may be configured to navigate the information displayed on a display device using a touch panel. Since a screen display is limited by a size of a display device, it is general for the user device to support a scroll function for navigating information larger than the screen in size. That is, the scroll function provides a general method for navigating the information that is not shown on a display window, i.e., that is outside of a display of the user device.

### SUMMARY OF THE INVENTION

It would be advantageous to have an improved information display method. To better address this concern, a method is provided comprising displaying information; detecting a folding touch input; setting and displaying a reference position where the folding touch is detected; and folding the information in a direction towards the reference position while scrolling in response to a folding scroll input.

In another aspect, the invention provides an information display apparatus of a terminal, the apparatus comprising a display unit which displays information; a touch panel which detects a folding touch input and a folding scroll input; and a control unit which sets and displays a reference position where the folding touch input is detected when the information is displayed on the display unit and which folds the information in a direction towards the reference position while scrolling in response to the folding scroll input.

### BRIEF DESCRIPTION OF THE DRAWINGS

The above and other aspects, features, and advantages of various embodiments of the disclosure will be more apparent from the following description taken in conjunction with the accompanying drawings, in which:

FIG. 1 is a diagram illustrating an information navigation mechanism in a user device with a touch panel according to various embodiments.

FIG. 2 is a diagram illustrating an information navigation mechanism with a scroll apparatus according to various embodiments.

FIG. 3 is a block diagram illustrating a configuration of a user device according to various embodiments.

FIG. 4 is a flowchart illustrating an information navigation and display method of a user device according to various embodiments. FIG. 5 is a flowchart illustrating more information of the reference line setting operation of FIG. 4 according to various embodiments. FIGS. 6A and 6B are diagrams illustrating folding touch generation mechanisms for setting the reference line in the procedure of FIG. 5, according to various embodiments.

FIG. 7 is a flowchart illustrating an information object folding and/or unfolding procedure in response to a scroll direction in the information display method according to various embodiments.

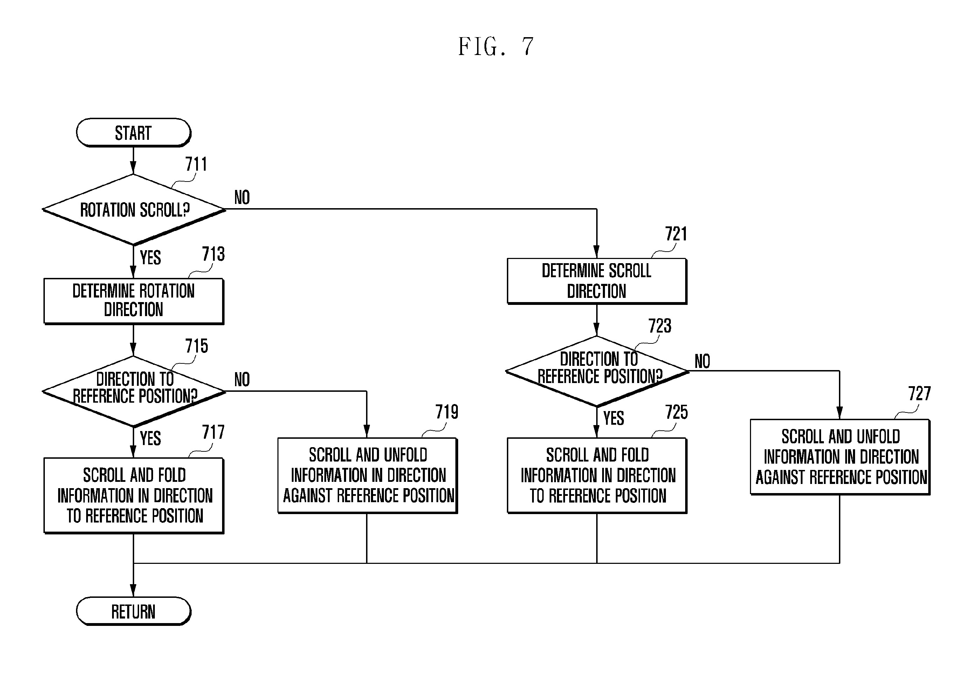

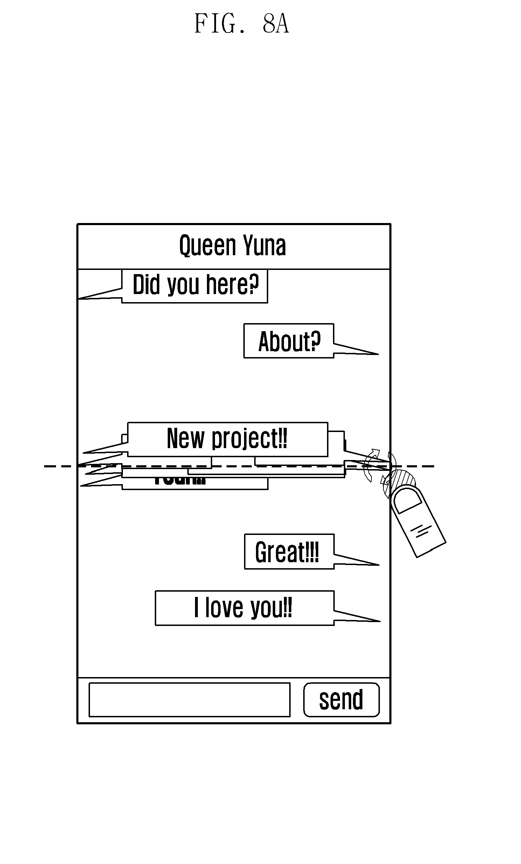

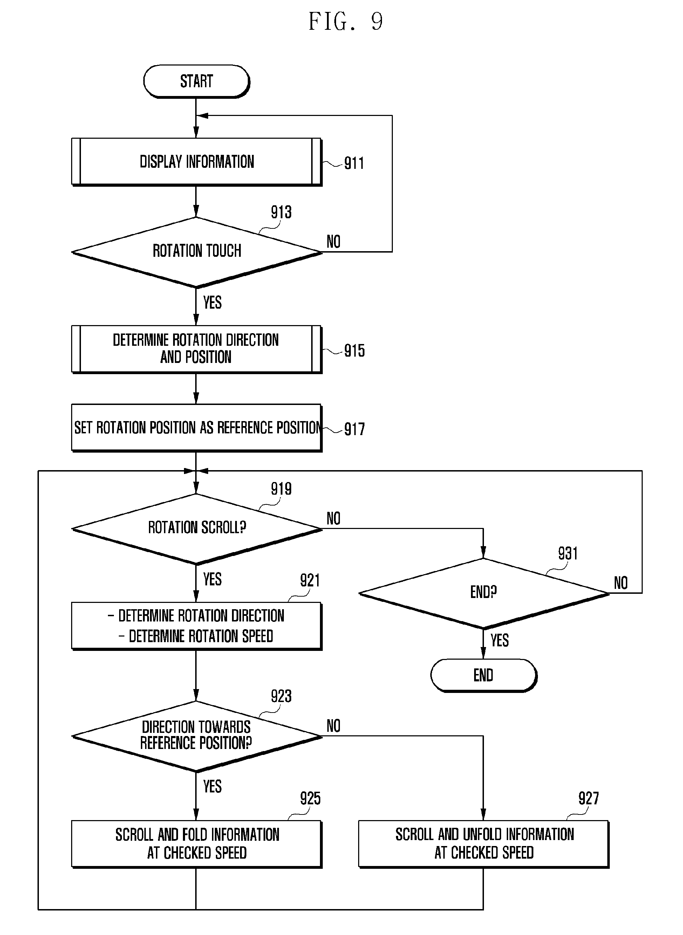

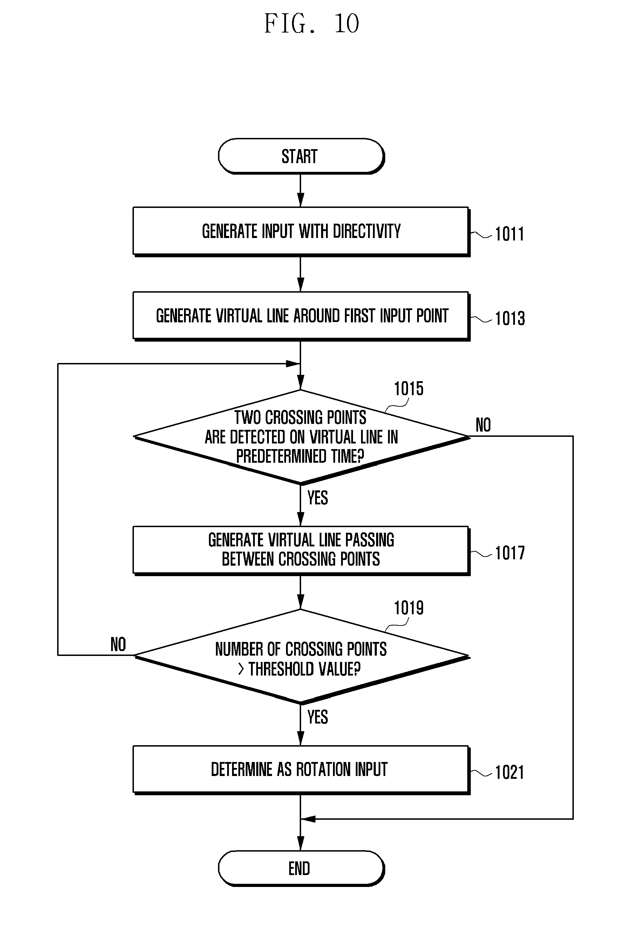

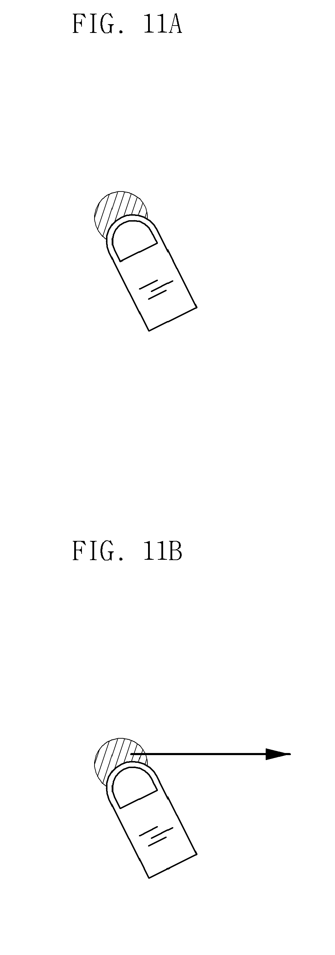

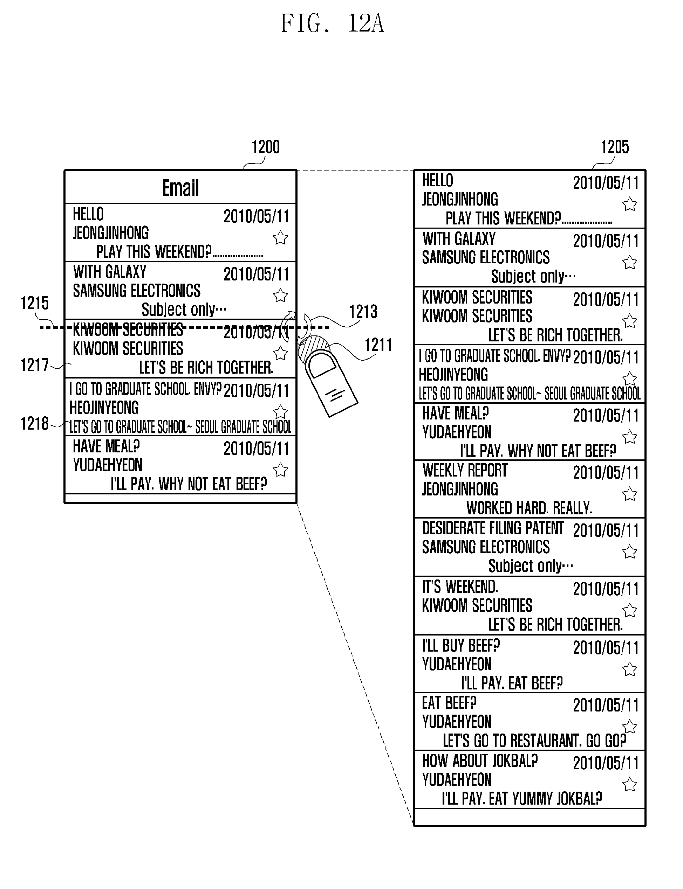

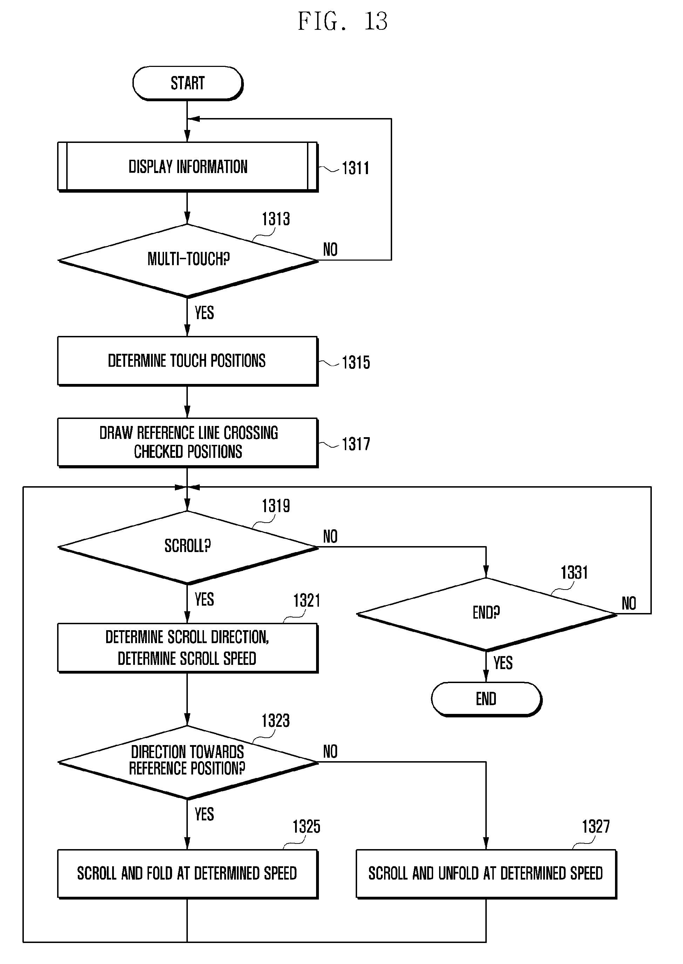

FIG. 8A to 8E are diagrams illustrating screen images for explaining the folding/unfolding procedure of FIG. 7 according to various embodiments. FIG. 9 is a flowchart illustrating a procedure of shrinking an information object according to a rotation touch in an information display method according to various embodiments. FIG. 10 is a flowchart illustrating more information of the rotation touch detection operation of FIG. 9 according to various embodiments. FIGS. 11A to 11G are diagrams illustrating motions of generating a rotation touch in the procedure of FIG. 10 according to various embodiments. FIGS. 12A to 12D are diagrams illustrating information objects for explaining folding and unfolding operations after setting a reference line with a rotation touch gesture through the procedure of FIG. 10 in accordance with some embodiments. FIG. 13 is a flowchart illustrating a procedure of folding information items in response to a multi-touch gesture in an information display method in accordance with some embodiment.

FIGS. 14A to 14D are diagrams illustrating information objects for explaining folding and unfolding operations in the procedure of FIG. 13 in accordance with some embodiment.

FIG. 15 is a flowchart illustrating a procedure of folding an information object in response to a straight line gesture in a user device in accordance with some embodiment.

FIG. 16 is a diagram illustrating screen images for explaining operations of setting a reference line through the procedure of FIG. 15 in accordance with some embodiment.

FIG. 17 is a diagram illustrating screen images for explaining a procedure of folding and unfolding information object using a linear scroll or rotation touch gesture in the user device in accordance with some embodiment.

FIGS. 18A and 18B are diagrams illustrating screen images for explaining visual effects indicating a folded part of the information object in a user device in accordance with some embodiment.

FIG. 19 is a flowchart illustrating a procedure of assigning identifiers to information items and information object in order to navigate and display information items corresponding to the identifiers in the user device according to various embodiments.

Throughout the drawings, it should be noted that like reference numbers are used to depict the same or similar elements, features, and structures.

### DETAILED DESCRIPTION

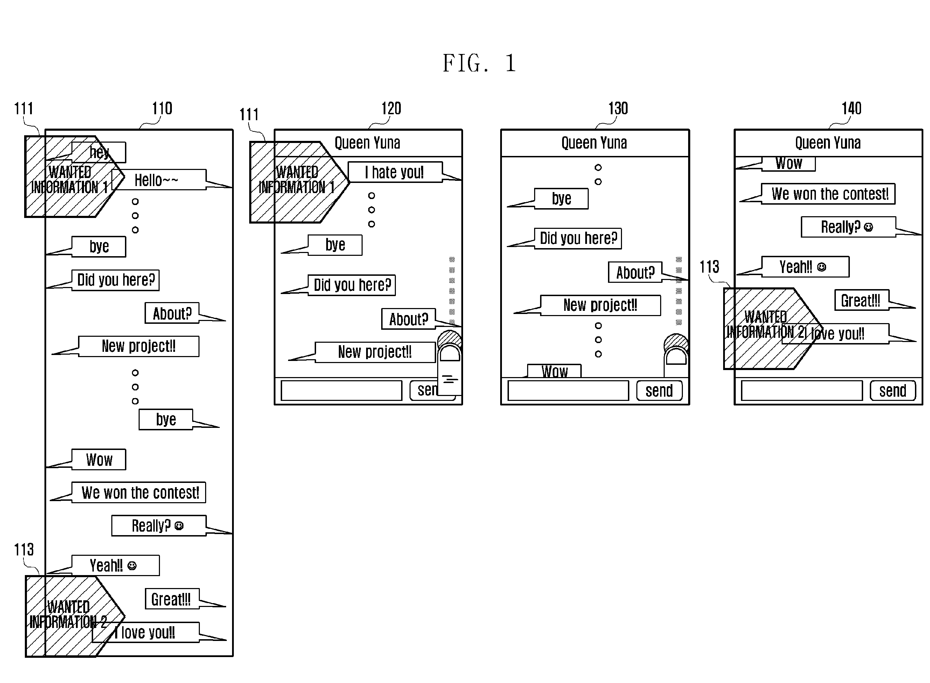

FIG. 1 is a diagram illustrating an information navigation mechanism in a user device with a touch panel according to various embodiments.

Referring to FIG. 1, which shows an example of navigating chat content on a chat application window, when using the chat application, chat messages exchanged between two users are displayed in the chat message window 110. As a number of chat messages increases, a chat message window 110 may stretch vertically to become larger than a size of the screen such that only the recent chat messages appear on the screen. For, example, in order to check a certain chat message line in the middle of or after the chat message appearing on the screen, the user may have to scroll the chat message window 110 to navigate the chat content. In a case where the user may want to check chat messages 111 and 113 in the chat message window 110, the user may scroll the chat message window 110 downwards in order to check the chat message 111 first, as shown in a screen image 120 and then may scroll upwards in the chat message window 110, as shown in the screen images 130 and 140, in series in order to check the chat message 113.

Accordingly, the longer the chat message window 110 is, the more cumbersomely the user scrolls the chat message window 110. Particularly when searching for the earlier chat message 111, the user may have to scroll the chat message window 110 in an opposing direction. In this case, the target chat messages 111 and 113 may not be displayed on the screen simultaneously and thus the user may have to scroll up and down the chat message window 110 frequently. Thus, the user may have to consume or take a long time to view multiple target chat messages especially in the long chat message window 110, as shown in FIG. 1, thus, resulting in user inconvenience. Also, when the target chat messages 111 and 113 are distributed distantly in the chat message window 110, as shown in FIG. 1, the user may not view the target messages simultaneously on a screen so as to alternately scroll up and down the chat message window 110, thus resulting in difficulty of comparison analysis.

As described above, the related-art scroll method has a drawback in that at least two distantly distributed information items may not be checked simultaneously on a size-constrained display screen. In a case of attempting to view multiple information items distributed distantly in an information window larger than a screen of a touch panel-enabled user device, the user may have to navigate the information window with the scroll function. Accordingly, when a user may intended to compare distributed information items with each other, the user may be inconvenienced because it is impossible to simultaneously display the two information items on the screen. Accordingly, the user may have to navigate the information window in order to search for the distributed target information items to be compared frequently, resulting in an increase of unnecessary information search time and user inconvenience.

To solve the problems described above and other problems, various embodiments described herein suggest a system and method for simultaneously displaying distantly distributed information items of an information object larger than a screen size of the user device on a screen of the user device.

The above information is presented as background information only to assist with an understanding of the present disclosure. No determination has been made, and no assertion is made, as to whether any of the above might be applicable as prior art with regard to the disclosure.

The following description with reference to the accompanying drawings is provided to assist in a comprehensive understanding of various embodiments of the invention as defined by the claims and their equivalents. It includes various specific details to assist in that understanding but these are to be regarded as merely embodiments. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of various embodiments of the disclosure is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The various embodiments of the disclosure propose an apparatus and method for displaying multiple large information items belonging to an information object on a single screen simultaneously by reediting the information object. For this purpose, the user device, according to various embodiments of the disclosure, may determine a reference line for folding an information object larger than a screen size when navigating the information object and may fold the information object in order to skip unnecessary parts of the information object. The user device may control the information items, selected by a user, on the information object may be displayed on the screen simultaneously. When an information object is too large to simultaneously display the information items distributed on the information object on the screen, the user device may fold the information object when shortening the distance between the target information items such that the target information are simultaneously displayed on the screen.

In the following description, the term "folding" may refer to an action for shortening the distance between two points by hiding, condensing, removing, folding, or overlapping an unnecessary part of the information object, wherein the unnecessary part of the information object is a part of the information object that the user does not desire to view. The term "reference line" may refer to a line on which the information object is folded such that the information object is folded according to the scroll direction. The term "folding touch" may refer to a touch gesture to set the reference line. The folding touch may be a rotation touch, a multi-touch, a predefined object touch, such as a touch to an icon, software button, or any other similar and/or suitable object, or a specific touch gesture, such as a horizontal or vertical drawing touch. The term "folding scroll" may refer to the touch gesture for folding the information object in a state where the reference line has been set. The folding scroll may be a rotation scroll or a straight-line scroll. Here, the straight-line scroll may include a vertical scroll and a horizontal scroll, the vertical scroll may include up-scroll from a bottom to a top and down-scroll from the top to the bottom, and the horizontal scroll including a right-scroll from a left side to a right side and a left-scroll from the left side to the right side. The touch gesture may include motion gestures. That is, the touch panel of the terminal equipment may determine the motion gesture, such as hovering as well as the touch. In various embodiments, the touch gesture may be substituted by a motion gesture. For example, in one embodiment, the term "folding touch" may refer to the motion corresponding to the touch gesture. In the following description, the terms "touch gesture" may be used interchangeably with the term "touch input".

In the following description, the term "information object" denotes the data processed and displayed by the user device, such as an electric document, chatting data, an electronic book, email data, a list, such as a voice call item list, a text messaging item list, a messenger chat list, a webpage, a picture, a music file list, a motion picture list, etc. In the following, the description may be made under the assumption that the information object is a chat content of an instant messaging application. Herein, instant messaging, a messenger or messaging may be a form of communication over the Internet for exchanging instant messages in real time. There may be various types of instant messaging applications.

In various embodiments, information may be provided (e.g., displayed via a display. An input may be detected. A position where the input is detected may be set as a reference position. The setting may include dividing the information into a plurality of portions including a first portion and second portion. At least one of the first portion or the second portion may be moved toward the reference position.

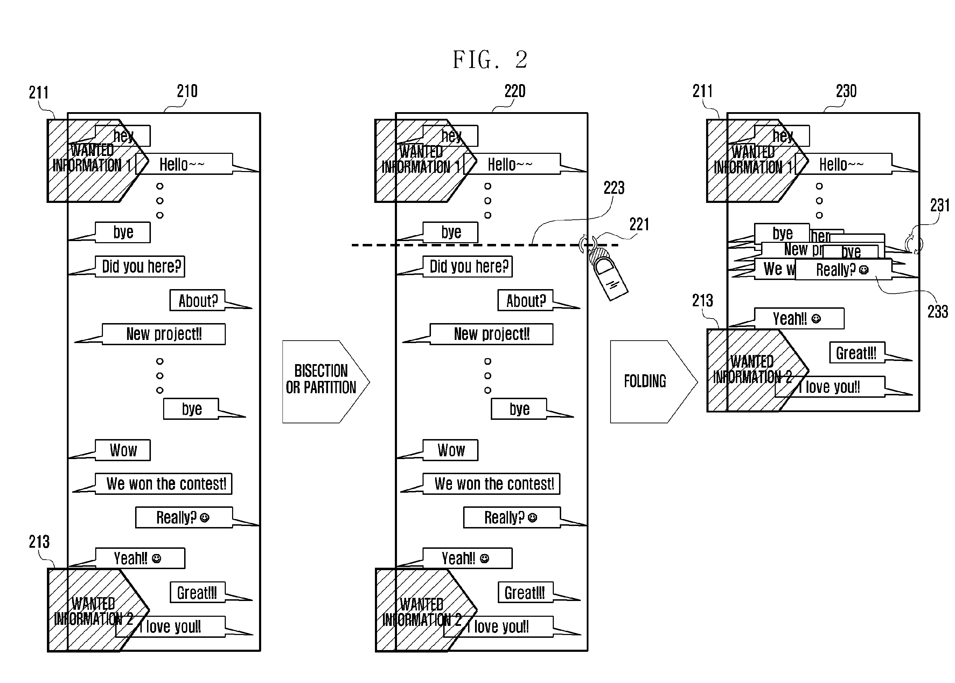

More information is provided below with respect to FIGS. 2-19.

FIG. 2 is a diagram illustrating an information navigation mechanism with a scroll apparatus, according to various embodiments. Referring to FIG. 2, which is directed to a case of navigating a chat window, when using a messenger messaging service, a chat message window 210 may stretch and thus an earlier message lines may scroll off a screen as a chat progresses. At this time, if a user wants to view chat messages 211 and 213 that are too distant to be simultaneously displayed on the screen, the user device may bisect the information object with a reference line on the screen and may then fold the information object into pleats according to the reference line such that the unnecessary part of the information object may be shrunk between the chat messages 211 and 213. That is, if a folding touch is executed at a point on a chat message window 220, then the user device may detect the touch and may set the reference line 223 so as to bisect the information object vertically. As shown in a chat message window 230, in response to a folding scroll action 231 of the user, the user device may fold the unwanted part of the information object into pleats 233, according to the reference line 223. In this way, the user device may be capable of displaying the target information items, being the chat messages 211 and 213, on the screen simultaneously, as shown in the chat message window 230. That is, the user device may be capable of bisecting an information object with the reference line 223 and folding the unwanted part of the information object into pleats 233 according to the reference line 223 in order to simultaneously display the target information items, i.e., the chat messages 211 and 213 that are distant from each other on the screen as shown in the chat message window 230.

The user device may bisect the information object with the reference line 223 and may fold the unwanted parts of the information object into the pleats 233 according to the reference line such that multiple wanted parts of the information object are displayed on the screen simultaneously. The information display method according to various embodiments of the disclosure may enable navigating an information object larger than the display screen and displaying the information items that are disposed at a distance from each other on the information object.

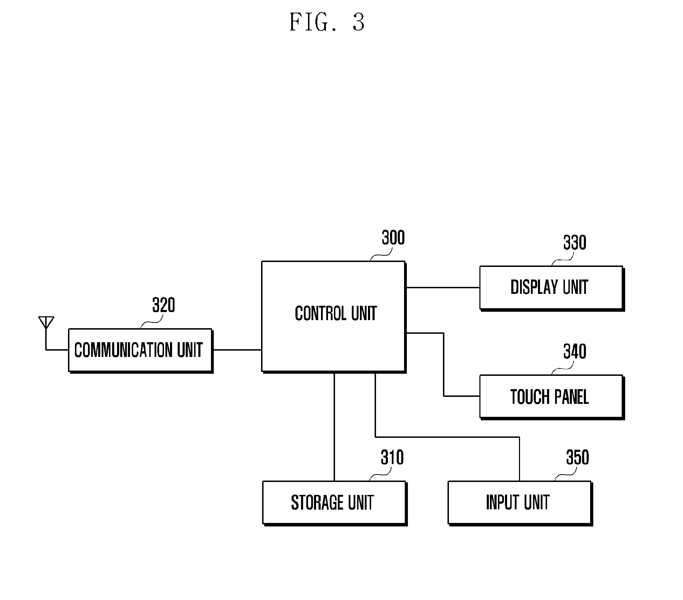

FIG. 3 is a block diagram illustrating a configuration of a user device, according to various embodiments.

Referring to FIG. 3, a communication unit 320 may provide radio communication with a base station or any other similar and/or suitable device that may perform radio communication. The communication unit 320 may include a transmitter for up-converting a frequency of a signal to be transmitted and for amplifying the transmission signal and a receiver for low noise amplifying a received signal and for down-converting the frequency of the received signal. The communication unit 320 may also include a modulator and a demodulator for processing transmitted and received signals. The modulator may modulate the transmission signal and may transfer the modulated signal to the transmitter, and the demodulator may demodulate the signal received through the receiver. In this case, the modulator and/or demodulator may process at least one of Long Term Evolution (LTE), Wideband Code Division Multiple Access (WCDMA), Global System for Mobile communications (GSM), Wi-Fi, Wireless Broadband (WiBro), Near Field Communications (NFC), Bluetooth signals and any other similar and/or suitable Radio Frequency (RF) communication signals. According to various embodiments of the disclosure, it may be assumed that the communication unit 320 is equipped with LTE, Wi-Fi, Bluetooth, and any other similar and/or suitable communication modules.

A control unit 300 may control overall operations of the user device and, particularly may control setting of a reference line for folding the information object into pleats in response to a folding touch and may fold an unwanted part of the information object into pleats according to the reference line in order to simultaneously display distantly distributed multiple information items that a user may desire to view on the display screen.

A storage unit 310 may include a program memory for storing an Operating System (OS) of the terminal apparatus and application programs executed on the terminal apparatus and a data memory for storing data generated by the application programs and/or a user of the terminal apparatus.

A display unit 330 may display the information items with folded pleats corresponding to unwanted parts of the information object under the control of the control unit 300. The display unit 330 may be implemented with one of Liquid Crystal Display (LCD), an Organic Light Emitting Diode (OLED) display, or any other similar and/or suitable display. A touch panel 340 may generate input signals corresponding to folding touch and folding scroll. The touch panel 340 may be capable of detecting a finger touch gesture made by human finger of a user or a stylus pen that is controlled by the user. The display unit 330 and the touch panel 340 may be implemented as a touchscreen.

An input unit 350 may be included internally and/or externally to the user device in order to receive a key input and may generate a corresponding key input signal. The input unit 350 may also be used to configure receiving of a signal input by means of an optical device or an infrared sensor-based motion recognition device.

In the above-structured user device, the control unit 300 may control the display unit 330 to display an information object such that the user bisects the information object in order to fold the unwanted parts into pleats and thus view wanted information items that are disposed at a distance from each other on the information object. In this case, if the user makes a folding touch on the touch panel 340, then the control unit 300 may detect the folding touch and may set the reference line for bisecting the information object. At this time, the reference line may be expressed in the form of a reference line on the screen of the display unit 330. If the user makes a folding scroll on the touch panel 340 when the reference line has been set, the control unit 300 may detect the touch input and may control the display unit 330 in order to display the information object of which the unwanted part is folded into pleats according to the reference line. If the folding scroll is released, the wanted part may be displayed subsequent to the folded part according to the control of the control unit 300. Accordingly, the distantly disposed information items may be simultaneously displayed on the screen of the display unit 330.

If a folding touch is detected at another point in the state that the two distantly disposed information items are displayed on the screen of the display unit 330 along with the folded pleats, then the control unit 300 may detect the folding touch on the touch panel 340 in order to set another reference line at the corresponding position. Afterward, the control unit 300 may select new information items by folding the information object into pleats according to a new reference line in response to a new folding scroll input.

Here, the control unit 300 may include an event detector (not shown) for detecting an input event, a scroll manager (not shown) for processing scroll, and a bisection manager (not shown) for bisecting an information object. The event detector may detect an input event and may notify the scroll manager of the input event. Here, the input event may be a touch event detected on the touch panel 340 and may include the folding touch, the folding scroll, or any other similar and/or suitable touch event. The scroll manager may scroll the information object in response to the user input in order to search for the target information item. At this time, if a user input for bisecting the information object is detected, the scroll manager may present a scrolling status and information and may input information. If the bisection request input is detected, then the scroll manager may notify the bisection manager of the bisecting request. The bisection manager may bisect an electronic document according to the currently detected information. The scroll manager may additionally display an information object bisecting navigation area to the user. Here, the scroll manager and the bisection manager may be integrated into a single module.

The term "navigation", as recited herein, may be construed broadly. In other words, the term "navigation" may refer to a screen manipulation behavior for searching for a certain information item with the currently running application. That is, the navigation may include user actions, such as scrolling a menu for selecting a menu item, scrolling an email list for checking a specific email, scrolling a webpage in web browsing, manipulating the screen for select a file, and other similar and or suitable screen manipulation actions and touch gestures.

In the user device of FIG. 3, a method for simultaneously displaying distantly distributed information items on the screen by folding an unwanted part of the information object into pleats is implemented as follows.

The control unit 300 may first control a touch controller (not shown) in order to set a reference line for bisecting the information object displayed on the display unit 330 in response to the folding touch and may scroll the information object in response to a folding scroll. At this time, the folding touch may be made in a form of a rotational touch gesture, a multi-touch gesture, a specific icon touch gesture or any other similar and/or suitable touch gesture or user input; and the folding scroll may be made in a form of a rotational touch gesture or vertical and/or horizontal scroll gesture or any other similar and/or suitable touch gesture or user input. The description of the various embodiments of the disclosure is made under the assumption that the folding touch and folding scroll are implemented using a rotational touch gesture, for example. The rotational touch gesture may be a gesture of drawing a curve in a manner as if the user rolls a physical object, and may be referred to as a rotational touch, a rotation touch, and/or a rotation. However, the disclosure is not limited thereto, and the rotationally touch gesture may be any suitable and/or similar touch gesture and/or user input.

For example, if the rotation is made in counter-clockwise direction, then the control unit 300 may scroll down the information object such that a part of the information object above the reference line is folded into pleats according to the reference line. Otherwise, if the rotation is made in clockwise direction, the control unit 300 may scroll down the information object such that the other part of the information object below the reference line is folded into pleats according to the reference line. By folding an unwanted part into pleats according to the reference line, the control unit 300 may be capable of controlling the display unit 330 in order to display other part of the information object in a manner corresponding to a space secured by folding the unwanted part into pleats. Although the description of the various embodiments is related to a case where the counter-clockwise rotation corresponds to downward folding and the clockwise rotation to upward folding, various embodiments of the disclosure is not limited thereto, and the counter-clockwise rotation may correspond to an upward or downward folding. Also, the rotational touch gesture may correspond to folding in one direction regardless of the rotation direction.

If the rotation touch is made in a direction opposite to the rotation touch made for folding when the information object has been folded, i.e., if a rotation touch is made in the clockwise direction when the information object has been folded into pleats in response to the rotation touch made in the counter-clockwise direction or vice versa, then the control unit 300 may unfold the pleats such that the information object is recovered to an original state. That is, if a rotation touch is made in a direction opposite to a direction of the previous rotation touch, then the control unit 300 may unfold the folded pleats in order to stretch the information object according to the rotation touch amount.

At this time, the control unit 300 may control displaying of the folded unwanted part of the information object with a visual effect of a crumpled, an overlaid, or a compressed image and may place an icon indicating the folded part of the information object. If a touch is made onto an image or an icon indicting the folded part around the reference line, then the control unit 300 may unfold the folded part in order to recover the original display of the information object.

The control unit 300 may also control a folding speed according to a rotation speed of the folding scroll. For example, the folding and unfolding speed of the information object may be configured to be in proportion to the drawing speed of a circle for inputting the rotation touch. Also, it may be possible to apply a weight for the rotation touch made with a large circle so as to accelerate the folding or unfolding action.

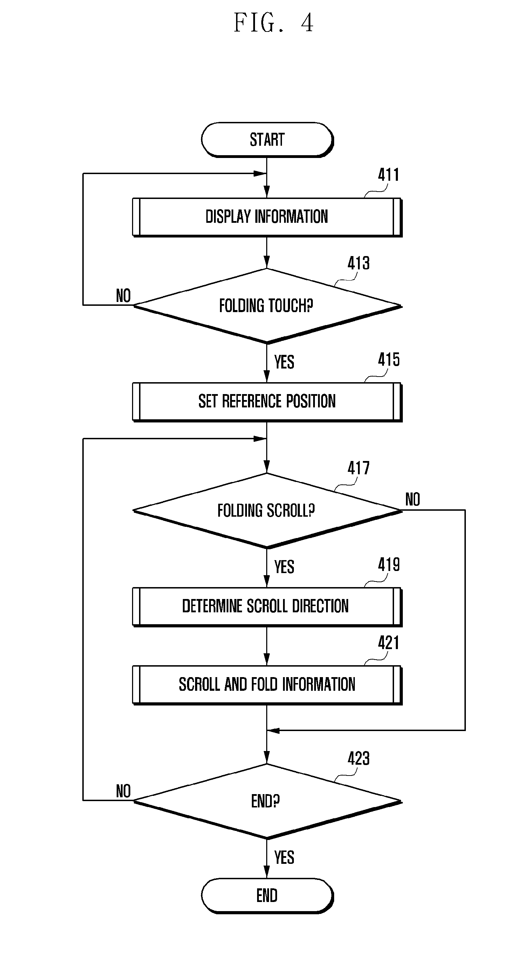

FIG. 4 is a flowchart illustrating an information navigation and display method of a user device according to various embodiments.

Referring to FIG. 4, at operation 411, a control unit (e.g., the control unit 300) may control a display (e.g., the display unit 330) to display an information object of the currently executed application. Here, the information object may be any of webpage, chatting content, email content, electronic book, application-specific list, such as a call log list, a text message list, an email list, a web browsing history list, a motion picture list, a still picture list, a messenger communication log list, or any other similar and/or suitable application-specific list. The information object may be larger than the screen size of the display unit 330. In this case, the user may navigate the information object in a unit of a page or a line with the scroll function. According to various embodiment of the disclosure, a reference line bisecting the information object on the screen may be set and shrinking of an unwanted part of the information object in order to simultaneously display the distantly distributed information items on the screen.

At operation 413, if the user executes a folding touch when the information object is displayed, then the control unit 300 may detect a point at which the folding touch has been made. At operation 415, the control unit 300 may then set the reference line crossing the detected point in order to bisect the information object. At this time, the reference line may be displayed on the screen, however, the disclosure is not limited thereto, and the reference line may be not displayed. As described above, the folding touch may be made in the form a rotation touch, a multi-touch, or a touch on a specific object, e.g., an icon, a soft button, or any other similar and/or suitable object, and/or may be a linear touch preconfigured for bisection.

At operation 417, if a folding scroll is executed after the configuration of the reference line, the control unit 300 may detect the folding scroll. At operation 419, the control unit 300 may determine a direction of the folding scroll. At operation 421, the control unit 300 may scroll or fold the information object in the determined direction. Here, the folding scroll may be made with a rotation, or horizontal and/or vertical movement gesture. At operation 417, if the folding scroll is detected after setting the reference line, then the control unit 300 may detect the folding scroll on the touch panel 340 and determine the folding scroll direction. At operation 419, the control unit 300 may change (e.g., reduce, compress or shrink) the information object towards the reference line according to the folding scroll.

Here, the folding scroll may be made by a drag gesture in vertical or horizontal direction after the scroll or touch gesture has been made with a rotation touch. In various embodiments of the disclosure, it is assumed that if the reference line is set by the rotation touch, then the folding scroll is also made by a rotation touch, and otherwise, if the reference line is set by a certain touch gesture other than rotation touch, then the folding scroll is made by a vertical and/or horizontal scroll gesture. Accordingly, the folding scroll may be executed a rotation touch after setting the reference line with a certain gesture other than the rotation touch or in order to perform the folding scroll with a vertical and/or horizontal scroll gesture after setting the reference line with the rotation touch. For example, the reference line may be set with a multi-touch gesture and then the information object shrink may be performed with a rotation touch.

The folding direction of the information object may be determined according to the rotation direction of the rotation touch or a flicking or dragging direction of a straight-line touch. If a scroll pattern is detected, then the control unit 300 may fold the information object into pleats according to the reference line on the screen of the display unit 330 according to the scroll input. If the folding scroll is stopped when the information object is being shrunk in response to the folding scroll following the folding touch, then the control unit 330 may end the information object shrink procedure at operation 423. If the user makes a folding scroll when the reference line has been set, then the control unit 300 controls the display unit 330 such that a certain part of the information object is shown with a visual effect of being folded into pleats, the certain part being the user's unwanted part. Afterward, if the user stops the folding scroll, then the control unit 300 may stop the information object folding action. If the folding scroll stops at a user-intended timing, then the target information items may be displayed on the screen of the display unit 330.

If the unwanted part of the information object has been folded into pleats according to the reference line, and if the folding scroll is made in the direction opposite to the reference line, e.g., in the direction opposite to the information folding direction, then the control unit 300 may unfold the pleats from the reference line. That is, if a folding scroll is made in the direction opposite to the folding direction when the information object is folded into pleats, then the control unit 300 may unfold the pleats so as to be stretched to the original state. If a certain action or touch is detected at the part folded into pleats, at operation 421, then the control unit 300 may unfold the pleats in order to recover the original display of the information object. For example, when the unfolding command is set to be generated by a double-touch, if the user makes a double-touch on the pleats, then the control unit 300 may identify the double-touch and touch point on the touch panel 340 and may unfold the pleats in order to recover the original information object.

If another folding touch is detected in the middle or of after performing the information object folding action, then the control unit 300 may repeat steps 413 to 423. That is, if a folding touch is generated at another point on the screen of the display unit 330 when folding the information object into pleats, then the control unit 300 may detect the folding touch in order to set the reference line to cross the point and may then fold the information objects according to the new reference line in response to a folding scroll. The user device, according to various embodiments of the disclosure, may be capable of simultaneously displaying at least two information items, which are distantly distributed on the information object that is larger than the screen size, on the screen by shrinking an unwanted part of the information object between the information items.

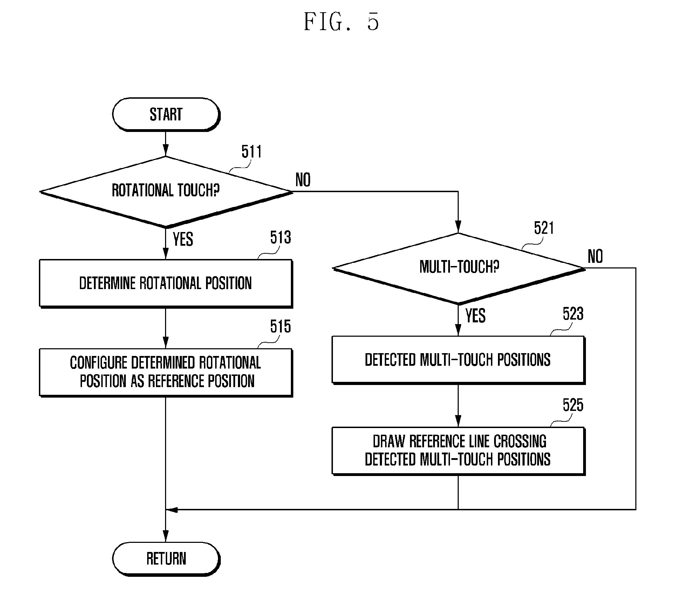

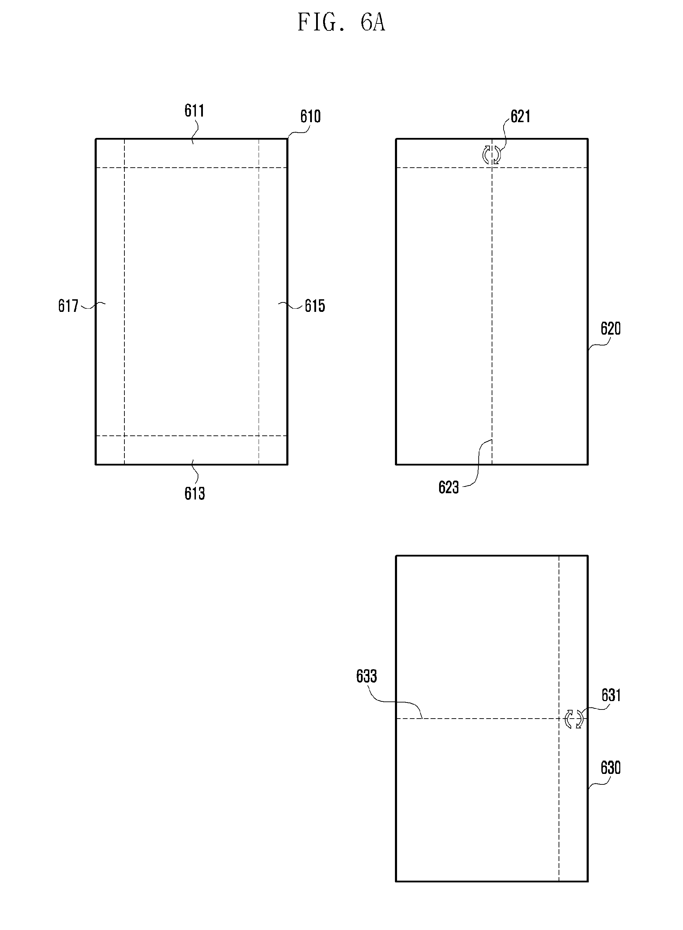

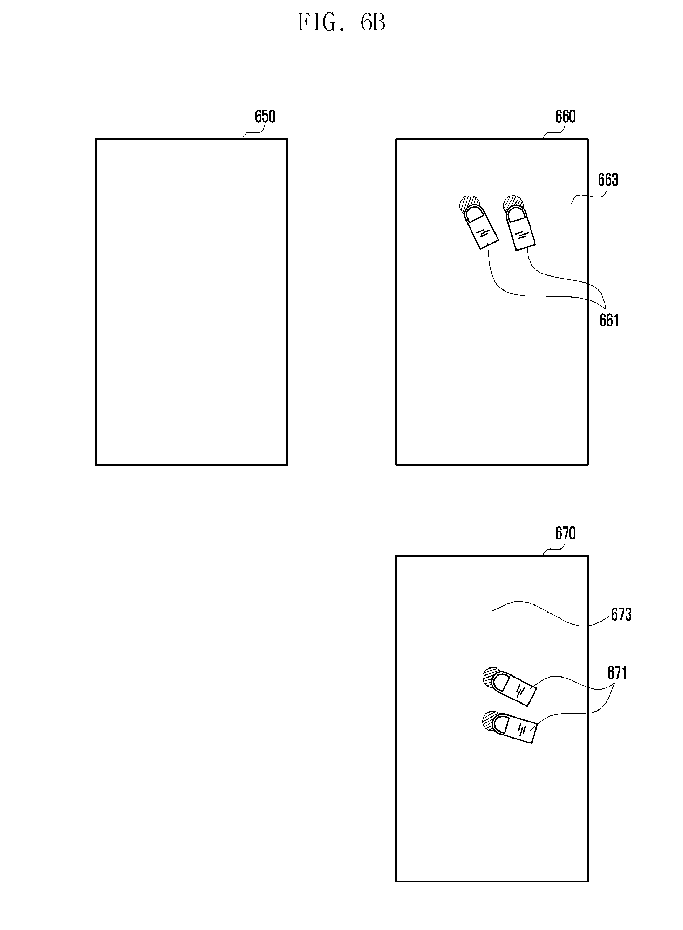

FIG. 5 is a flowchart illustrating more information of the reference line setting operation of FIG. 4, and FIGS. 6A and 6B are diagrams illustrating exemplary folding touch generation mechanisms for setting the reference line in the procedure of FIG. 5 according to various embodiments.

Referring to FIGS. 5, 6A, and 6B, if a predetermined touch or action is detected on the touch panel 340 when an information object is displayed on the screen of the display unit 330, then the control unit 300 may regard this as the folding touch. Here, the folding touch may be made with a rotation touch gesture and/or a predetermined type of touch gesture, wherein, hereinafter, a multi-touch gesture may be used to execute the folding touch. According to various embodiments of the disclosure, at least one of the rotation touch and multi-touch gestures may be configured to be detected as the folding touch. In a case where only the rotation touch gesture is configured to be detected as the folding touch, then the reference line setting procedure may be implemented only with steps 511 to 515 of FIG. 5, which will be discussed below. In a case where the multi-touch gesture is used as the folding touch, then the reference line setting procedure may be implemented only with steps 521 to 525, which will be discussed below. As shown in FIG. 5, the rotation touch or multi-touch gestures may be regarded as the folding touch.

Here, certain areas of the screen of the display unit 330 may be configured as rotation touch area sensitive to the rotation touch. As shown in FIG. 6A, edge areas 611, 613, 615, and 617 of a display area 610 of the display unit 330 may be configured as folding touch areas. Accordingly, if a rotation touch gesture is detected in any of the edge areas 611, 613, 615, and 617, then the control unit 300 may determine that the rotation touch is executed at operation 511, may determine the position of the rotation touch at operation 513, and may set the reference line crossing the position at operation 515.

For example, if the rotation touch gesture is detected at a point 621, which may be disposed in either of the rotation touch areas 611 and 613, the control unit 300 may inspect the point 621 and may set the reference line to cross the point 621 in a vertical direction for folding the information object as shown in screen 620. If a rotation touch gesture is detected at a point 631 of the rotation touch areas 615 and 617, then the control unit 300 may inspect the point 631 and set the reference line to cross the point 631 in a horizontal direction for folding the information object as shown in screen 630. At this time, the reference line may be presented explicitly, as denoted by reference number 623 and 633. In a case where the reference line is set as shown in the screens 620 and 630, the rotation direction of the rotation touch made at the points 621 and 631 is not considered. That is, when a folding touch is detected, the control unit 300 may set the reference line in consideration of only the point where the rotation touch has been made. Although FIG. 6A is directed to the case where the rotation touch is detectable at the edge areas 611, 613, 615, and 617, the control unit 300 may be configured to set the reference line when a rotation touch is detected at a predetermined area or a certain area of the screen of the display unit 330 as described above.

Referring to FIG. 6B, the multi-touch may be generated on the information display area of the screen of the display unit 330. For example, if the multi-touch is generated on the screen 650 of the display unit 330, then the control unit 300 may detect the rotation touch at operation 521, may detect all touch points of the multi-touch gesture at operation 523, and may set the reference line crossing the detected points at operation 525.

The screen 650 may correspond to the display area of the display unit 330 for displaying an information object. In the screen 660, if a multi-touch 661 is detected in the display area of the screen 660, then the control unit 300 may connect the multiple touch points of the multi-touch 661 in order to set the reference line 663. If another multi-touch 671 is detected in the display area of a screen 670, then the control unit 300 may connect the multiple touch points of the other multi-touch 671 in order to set the reference line 673. At this time, the reference line 663 or 673 may be presented explicitly. Once the reference line 663 or 673 has been set, the user device may fold the information object in order to shrink to the information object in response to a folding scroll.

FIG. 7 is a flowchart illustrating an information object folding and/or unfolding procedure in response to a scroll direction in an information display method according to various embodiments. FIGS. 8A to 8E are diagrams illustrating exemplary screen images for explaining the folding/unfolding procedure of FIG. 7 according to various embodiments.

Referring to FIGS. 7 and 8A to 8E, as described with reference to FIG. 5, the information object folding and/or unfolding procedure may be implemented with at least one of the rotation touch and the multi-touch gestures as the folding touch. When the rotation touch gesture is used as the folding touch, a folding scroll execution procedure may be implemented with only steps 711 to 719 of FIG. 7. When the multi-touch gestured is used as the folding touch, the folding scroll execution procedure may be implemented with only steps 721 to 727 of FIG. 7. As shown in FIG. 7, the folding scroll execution procedure may be implemented with rotation scroll and linear scroll gestures when the rotation touch or multi-touch gestures are used as the folding touch.

If a rotation touch is detected when the reference line has been set, the control unit 300 may interpret the rotation touch as the folding scroll at operation 711. If the rotation touch is detected after the reference line has been set, then the control unit 300 may interpret the rotation touch as rotation scroll. If the rotation scroll is detected, the control unit 300 may determine the rotation direction at operation 713 and then proceeds to operation 715 and may determine whether the rotation is made in the direction to the reference line or the direction opposite to the reference line. If the rotation is made in the direction to reference line, the control unit 300 may detect this at operation 715 and may fold the information object into pleats according to the reference line at operation 717. Otherwise, if the rotation is made in the direction against the reference line, then, at operation 719, the control unit 300 may detect this at operation 715 and may unfold the pleats so as to stretch the information object in the direction opposite the reference line.

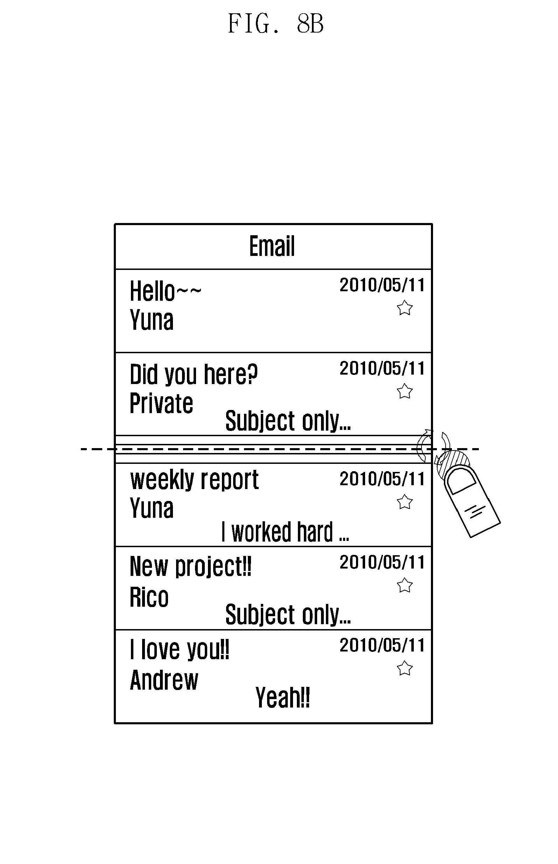

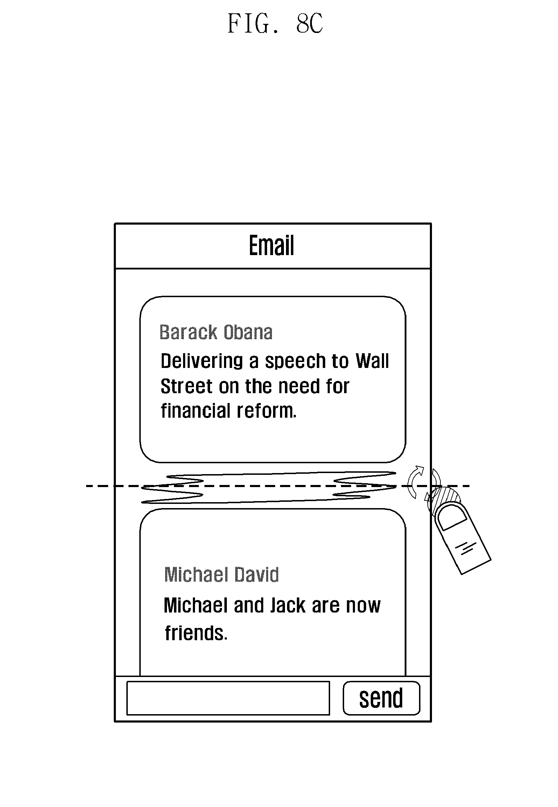

The folding action may be executed in various manners. FIGS. 8A to 8C show various folding actions according to various embodiments. FIG. 8A shows an exemplary folding action with an overlaying visual effect of overlaying, FIG. 8B shows an exemplary folding action with a compressing visual effect, and FIG. 8C shows an exemplary folding action with hiding visual effect. However, the disclosure is not limited to the visual effects of FIGS. 8A to 8C, and the folding action may also be executed with any other similar and/or suitable type of visual effect.

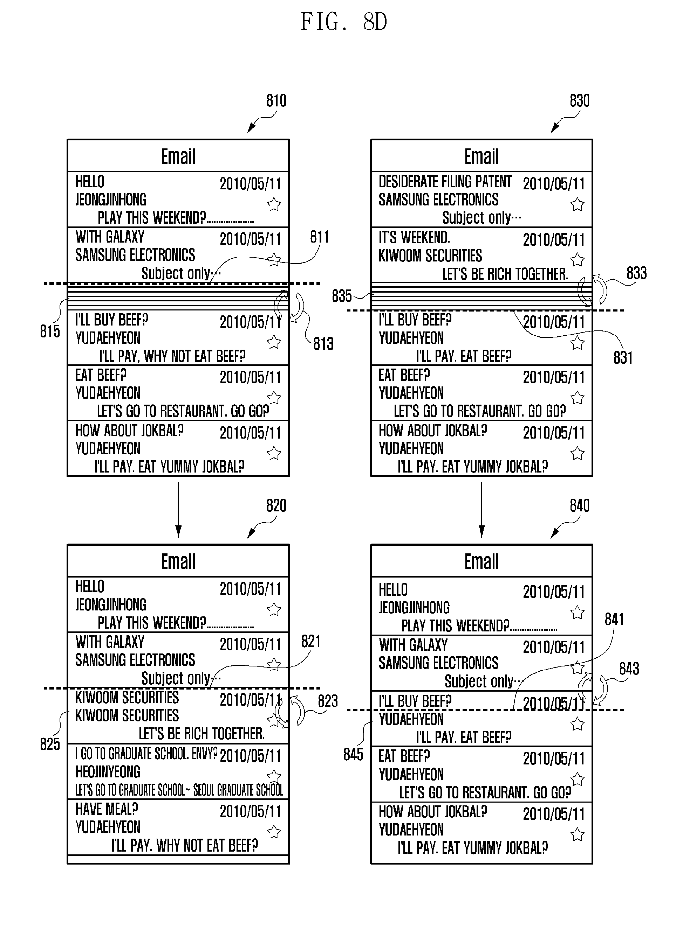

FIG. 8D shows an exemplary folding scroll action executed in response to a rotation touch. If the rotation scroll is detected, then the control unit 300 determines the rotation direction at operation 713. If the rotation direction 813 is upward from a lower part of the screen towards a reference line 811, then the control unit may detect this at operation 715 and may fold the lower part of the information object into pleats in upward direction from the bottom of a screen 810 towards the reference line 811, at operation 717, such that the lower part of the information object shrinks, as denoted by reference number 815. If, as shown in screen 830, the rotation direction 833 is downward from the upper part of the screen 830 towards the reference line 831, then the control unit may detects this at operation 715 and may fold the upper part of the information object into pleats in a downward direction from the top of the screen 831 according to the reference line 831, at operation 717, such that the upper part of the information object shrinks as denoted by reference number 835.

If the rotation scroll is detected when a part of the information object has been folded into pleats, as shown in the screen 810 or 830, then the control unit 300 may determine the rotation direction at operation 713. If, as shown in screen 820, the rotation direction 823 is downward from the reference line 821 and towards the lower part of the information object, then the control unit 300 may detect this at operation 715 and may unfold the folded part in the direction away from the reference line 821, that being in a direction downward from the reference line 821, at operation 719 such that the shrunken lower part of the information object stretches, as denoted by reference number 825. If, as shown in screen 840, the rotation direction 843 is upward from the reference line 841 and towards the upper part of the information object, then the control unit 300 may detect this at operation 715 and may unfold the folded part in the direction away from the reference line 841, that being in a direction upward from the reference line 841, at operation 719, such that the shrunken upper part of the information object stretches, as denoted by reference number 845.

If a linear scroll is detected when the reference line has been set, then the control unit 300 may detect this at operation 711 and may determine the scroll direction at operation 721. Here, the linear scroll may be any of horizontal scroll and vertical scroll as described above. If the scroll direction of the linear scroll is detected, then the control unit 300 determines whether the scroll is made in the direction towards the reference line or away from the reference line. If the scroll is made in the direction towards the reference line, then the control unit 300 may detect this at operation 723 and, then at operation 725, may fold the information object into pleats towards the reference line. Otherwise if the scroll is made in a direction away from the reference line, the control unit 300 may detect this at operation 723 and then, at operation 727, may unfold the pleats so as to stretch the information object in the direction away from the reference line at operation 727. The information object may be folded with various visual effects as shown in FIGS. 8A to 8C.

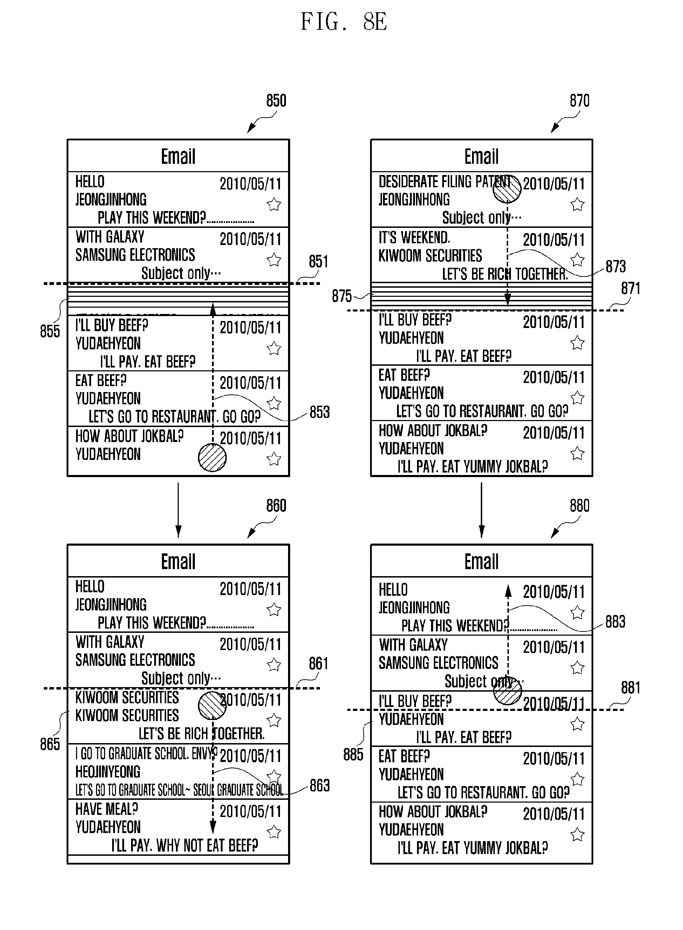

FIG. 8E illustrates exemplary screen images for explaining the linear scrolls associated with the reference line, and shows an exemplary reference line setting according to the horizontal scroll. As shown in screen 850, if a horizontal scroll is detected, the control unit 300 may determine the scroll direction at operation 721. If a scroll 853 is made below the reference line 851 and in a direction towards the reference line 851, then the control unit 300 may detect this at operation 723 and may shrink the lower part of the information object towards the reference line 851, which is in the upward direction, as denoted by reference number 855. As shown in screen 870, if the scroll 873 is made above the reference line 871 and in a direction towards the reference line 871, then the control unit detects this at operation 723 and shrinks the upper part of the information object to the reference line 871, in the downward direction, as denoted by reference number 875.

If a linear scroll is detected when a part of the information object has been shrunk towards the reference line, as shown in screens 860 and 880, then the control unit 300 may determine the scroll direction at operation 721. As shown in the screen 860, if a scroll 863 is made below the reference line 861 in a direction away from the reference line 861, i.e., in the downward direction from the reference line 861, then the control unit 300 may detect this at operation 723 and may stretch the shrunken part in a direction away from the reference line 861 at operation 727 such that the hidden part appears as denoted by reference number 865. As shown in screen 880, if a scroll 883 is made above the reference line 881 in a direction away from the reference line 881, i.e., in the upward direction from the reference line 881, then the control unit 300 may detect this at operation 723 and may stretch the shrunken part in a direction away from the reference line 881 at operation 727 such that the hidden part appears as denoted by reference number 885.

FIG. 9 is a flowchart illustrating a procedure of shrinking an information object according to a rotation touch in an information display method according to various embodiments.

Referring to FIG. 9, the user device may display an information object generated by the currently running application on the screen of the display unit 330 at operation 911. At this time, the information object may be larger than the screen size of the display unit 330. In the following, the description is made with the assumption that the application is a messenger application. If a rotation touch is made when the information object is displayed on the screen, the control unit 300 may detect the rotation touch at operation 913 and may determine a rotation touch position and direction at operation 915. In various embodiments of the disclosure, if it is intended to display distantly distributed information items on the screen simultaneously, then the user may set a reference line for folding the information object by making a rotation touch on the screen of the display unit 330. At this time, the user may make the rotation touch at a certain point on the screen of the display unit 330, and if the rotation touch is made in a predetermined area, as denoted by the reference number 610 of FIG. 6B, then the control unit 300 may process the rotation touch at the corresponding position. The control unit 300 may detect the rotation touch made on the touch panel 340 and may set the reference line for folding the information object.

FIG. 10 is a flowchart illustrating more information of the rotation touch detection operation of FIG. 9, and FIGS. 11A to 11F are diagrams illustrating motions of generating the rotation touch in the procedure of FIG. 10 according to various embodiments.

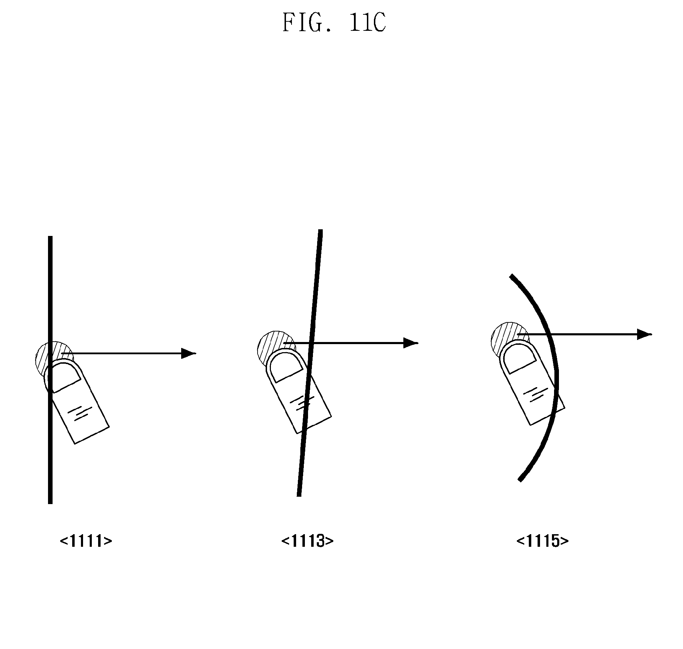

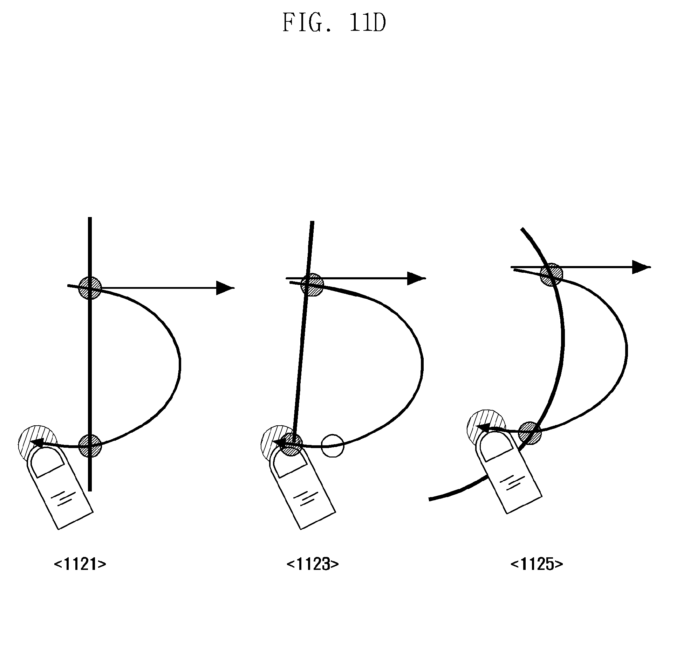

Referring to FIGS. 10 and 11A to 11F, the rotation touch detection according to an various embodiment of the disclosure is performed so as to draw a virtual line passing across or around the position where the touch is made, determining whether a curve is drawn to cross the virtual line twice in a predetermined time, and judging, if two crossing points are detected, the input of a rotation touch. If the user makes a touch as shown in FIG. 11A and moves the touch point in a direction as shown in FIG. 11B, the control unit 300 may detect the gestures as a touch and generate an input with directivity at operation 1011. At this time, the touch gesture can be made in a predetermined area of the screen of the display unit 330, e.g., areas 611, 613, 615, and 617 of FIG. 6A. The control unit 300 may draw a virtual line passing across or around the touch point at operation 1013 in the form of a straight line as shown in parts 1111 and 1113 of FIG. 11C or in the form of a curved line as shown in part 1115 of FIG. 11C. At this time, the virtual line may be detected most correctly and/or easily when it is drawn in the form of a straight line crossing the touch point in a direction perpendicular to the movement direction as shown in part 1111 of FIG. 11C. Next, the control unit 300 may monitor to detect a curve crossing the virtual line twice in a predetermined time at operation 1015. That is, if the user makes a rotation touch, the line of the rotation curve crosses the virtual line twice as shown in parts 1121, 1123, and 1125 of FIG. 11D within an interval time such that two cross points occur.

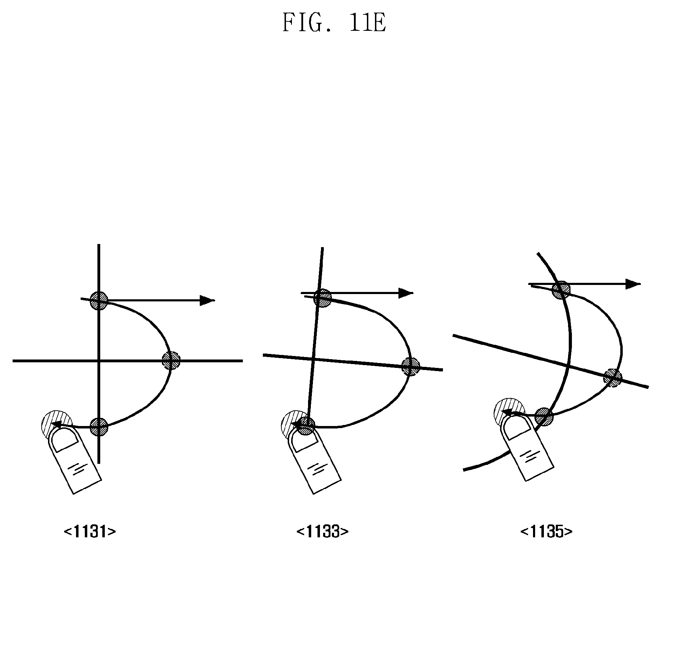

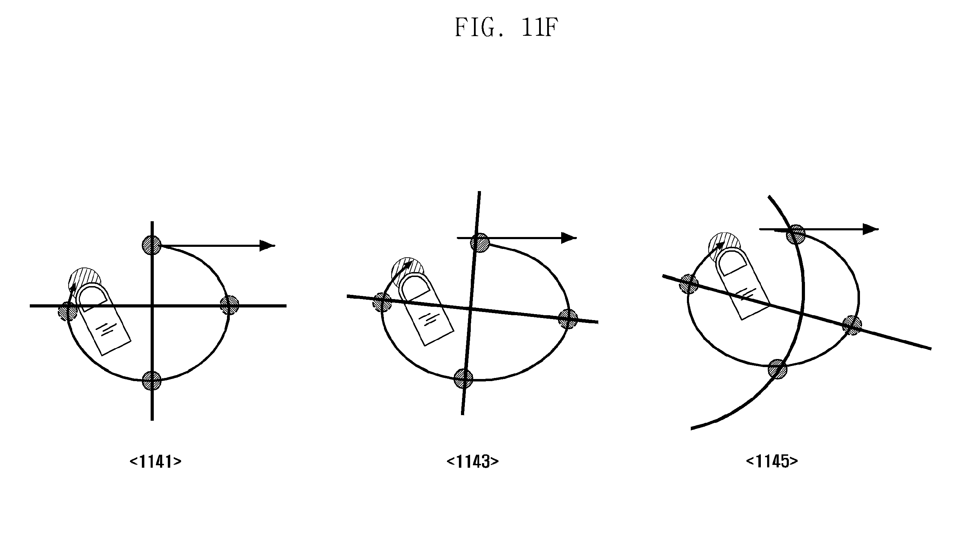

If the curve crossing the virtual line twice is detected as shown in FIG. 11D in the predetermined time, then the control unit 300 may draw or generate another virtual line crossing the center between the two crossing points or around the center and the curve as shown in parts 1131, 1133, and 1135 of FIG. 11E at operation 1017. The control unit 300 may determine whether the number of crossing points of the virtual lines and the curve is greater than a predetermined value at operation 1019 and, if so, determines this as the input of a rotation touch at operation 1021. That is, the control unit 300 may draw at least two virtual lines as shown in FIG. 11E and determines, if a number of crossing points of the curve drawn by the user and the virtual lines is greater than a predetermined value as shown in parts 1141, 1143, and 1145 of FIG. 11F (here, the threshold number of crossing points is 4), that a rotation touch has been made.

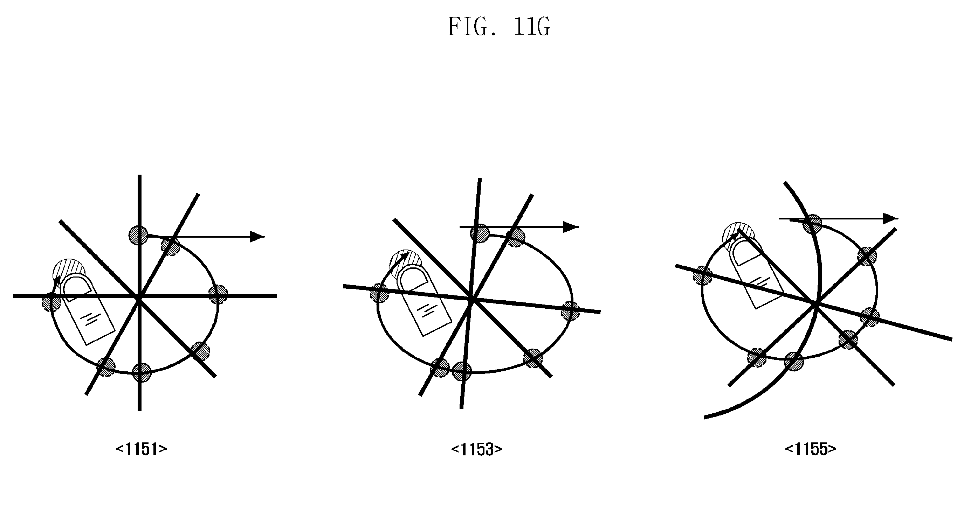

As described above, the information display method according to various embodiments of the disclosure may detect the input of a rotation touch in such a way of drawing at least two virtual lines passing across or around the position where the touch is made, may determine whether a curve is drawn to cross each virtual line twice in a predetermined time, and may determine, if the two crossing points are detected on each virtual line, the input of a rotation touch. That is, when a touch gesture is detected, the control unit 300 draws at least two virtual lines and determines, if a curve is drawn to generate a number of crossing points with the virtual lines which is greater than a predetermined value, that a rotation touch has been made. The touch rotation detection accuracy may be increased by increasing the number of virtual lines passing across or around the touch point to increase the crossing chance of the curve and the virtual lines as shown in parts 1151, 1153, and 1155 of FIG. 11G.

In order to detect a touch and determine a rotation touch input, the storage unit 310 may store the coordinates of the touch gesture (i.e., touch point), the direction of the movement gesture, a trajectory of drawing touch, and coordinates of crossing points and virtual lines. Also, the touch panel 340 traces the drawing touch on the screen of the display unit 330 and generates position information to the control unit 330, and then the control unit 300 draws the virtual lines and processes the position information of the drawing touch to determine an input of a rotation touch using the number of crossing points of drawn curve and the virtual lines.

A drawing tract and virtual line information may be partially deleted from the storage unit 310 under predetermined conditions to manage the storage space efficiently and to avoid unnecessary crossing point counting so as to detect the rotation input dynamically and accurately with recent data. The conditions may include a time duration for detecting the crossing points since the generation of the virtual lines, a maximum number of the crossing points, and exceeding the maximum number of crossing points. Assuming that the maximum number of crossing points is 3, if four crossing points are generated, then the oldest trajectory data may be deleted, i.e., the crossing point that is first detected. Here, the trajectory data to be deleted may be selected using the elapsed time and specific crossing point). Assuming that the maximum number of virtual lines is 2, if a new virtual line is drawn at the timing when the fourth crossing point is detected, then the oldest virtual line may deleted to prevent the number of virtual lines from being greater than the maximum value.

The drawing speed of a curve for inputting the rotation touch may be calculated as follows:

Speed of circular motion = distance between nth and k^{th} crossing points / time difference between k^{th} and nth crossing point detections

In the case where the folding touch is input in the form of the rotation touch gesture as described with reference to FIG. 10, the folding touch determination is made by drawing a first virtual line passing across or around an initial touch point and, monitoring to detect a curve drawn to cross the first virtual line twice, then drawing a second virtual line passing across or around the central point between the two crossing points on the first virtual line, and determining, if the number of crossing points of the virtual lines and the curve is greater than a predetermined value, that the rotation touch gesture is made.

FIGS. 12A to 12D are diagrams illustrating exemplary information objects for explaining folding and unfolding operations after setting the reference line with rotation touch gesture through the procedure of FIG. 10 according to various embodiments.

Referring to FIGS. 9, 10, and 12A to 12D, if the rotation touch gesture has been made in accordance with the procedure of FIG. 10, the control unit 300 may detect the rotation touch gesture at operation 913, may determine the rotation touch point at operation 915, and may set the reference line crossing the rotation touch point for shrinking the information object thereto at operation 917. For example, in screen 1200, the information object 1205, which is larger than the screen size, may not be entirely displayed on the screen of the display unit 330 at a time. In this case, the control unit 300 controls a part of the information object 1205 to be displayed on the screen 1200 of the display unit 330 at operation 911. If a touch gesture 1213 is made as denoted by reference number 1211 in the information object 1205 that is partially displayed on the screen 1200, then the control unit 300 determines whether the touch gesture is a rotation touch gesture (i.e., folding touch) for setting a reference line bisecting the information object through the procedure of FIG. 10 at operation 913, and if the touch gesture is determined as the rotation touch gesture, then determines the rotation touch point at operation 915, and sets the reference line crossing the rotation touch point at operation 917. At this time, the reference line 1215 may be presented explicitly on the screen of the display unit 330 as shown in FIG. 12A or not.

According to various embodiments of the disclosure as shown in FIG. 12A, if a circular motion input event is detected at an edge of screen of the display unit 330, then the control unit 300 detects the circular motion input event by means of the touch panel 340 and draws the reference line crossing the center point of the circular motion for folding the information object thereto. If a rotation touch gesture is detected after setting the reference line, then the control unit 300 determines the rotation touch gesture as the folding scroll input. At this time, the control unit 300 folds the information object into pleats towards the reference line according to the rotation direction of the rotation touch.

If a rotation scroll gesture is mad in the above described state, then the control unit 300 detects this at operation 919 and determines the rotation direction and rotation speed at operation 921 and determines whether the rotation direction of the rotation touch gesture is the direction towards the reference line at operation 923. If there is no rotation scroll gesture detected at operation 919, than the process is ended at operation 931. If the rotation direction is the direction towards the reference line, then the control unit 300 detects this at operation 923 and folds the information object into pleats towards the reference line at a speed corresponding to the rotation speed at operation 925. If the rotation direction is the direction away from the reference line, then the control unit 300 detects this at operation 923 and unfolds the pleats of the information object in order to stretch in the direction away from the reference line at operation 927.

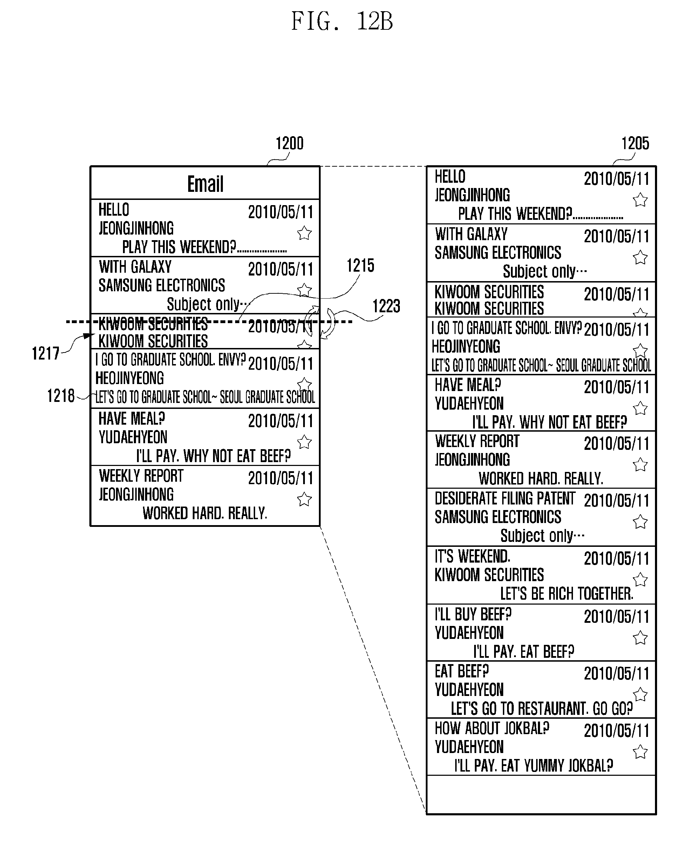

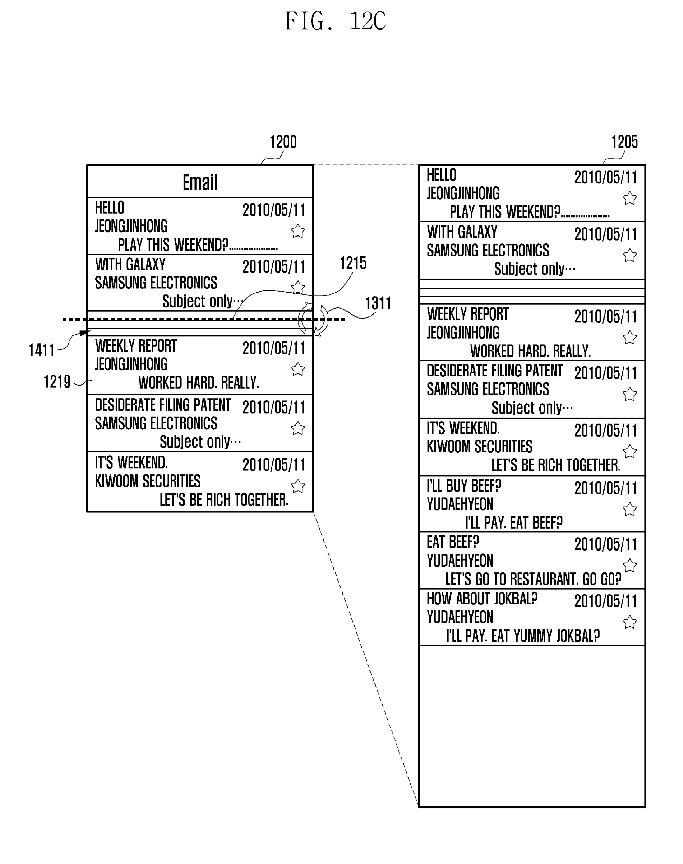

For example, if the rotation touch gesture 1223 is made below the reference line in clockwise direction, as shown in FIG. 12B, then the control unit 300 determines the rotation direction at operation 921, determines that the rotation direction is the direction to the reference line at operation 923, and scrolls the information object in the direction towards the reference line at operation 925 such that the information is folded towards the reference line 125. That is, if the rotation touch gesture of clockwise direction is detected, as denoted by reference number 1223 of FIG. 12B, then the control unit 300 scrolls the information object such that a part 1217 of the information object is folded into pleats towards the reference line. If the rotation touch gesture continues in this state, then the control unit 300 scrolls the information objects in the direction towards the reference line, as shown in FIG. 12C, and displays an indication mark for indicating that the information object has been folded as denoted by reference number 1411 in part 1200 of FIG. 12C. FIGS. 12C and 12C show that the information object has been folded even with item 1218.

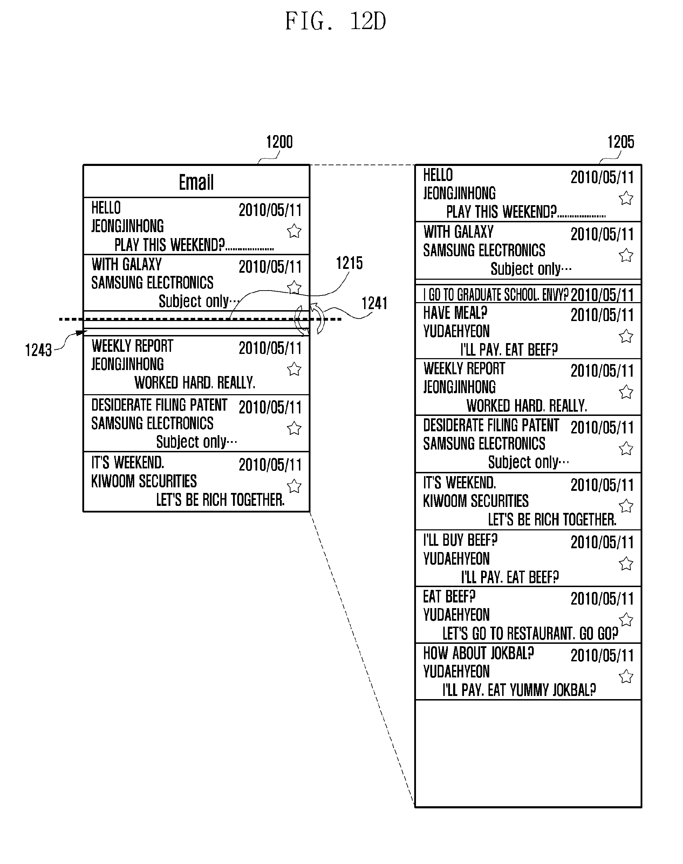

At this time, if the rotation direction is changed to the counter-clockwise direction as denoted by reference number 1241 of FIG. 12D, i.e., if the direction of the rotation touch gesture is changed with respect to the reference line, then the control unit 300 may detects this at operation 923 and may unfolds the part 1243 folded to the reference line 1215 to stretch in the direction against the reference line 1215.

FIGS. 12B to 12D show the procedure of folding the information object in response to the folding scroll made below the reference line 1215 in the clockwise direction and unfolding the folded information object in response to an unfolding scroll made in counter-clockwise direction. If a rotation touch gesture 1223 for scrolling is made in the clockwise direction, as shown in FIG. 12B, then the control unit 300 scrolls the information object such that the information item 1217 closest to the reference line 1215 is folded to the reference line 1215 in proportion to the rotation speed of the rotation touch gesture 1223 on the screen of the display unit 330. At this time, the folded information items may be displayed in the form of folded pleats as shown in FIG. 12C. At this time, a list type electronic document may be displayed with a visual effect of overlaid information items. If a rotation touch gesture 1241 is made in the direction opposite to that of rotation touch gesture for the folding scroll, as shown in FIG. 12D, when in the state of FIG. 12C, then the control unit 300 unfolds the folded part of the information item to stretch in opposite direction in proportion to the speed of the rotation touch gesture.

As described above, the information object scroll method according to various embodiments of the disclosure may be performed such that a reference line is set bisecting the information item at a position where the rotation touch gesture is detected, and that the information object is folded toward the reference line according to the rotation touch gesture or another rotation touch gesture. At this time, the screen of the display unit 330 may be configured to have the areas capable of sensing the rotation touch gesture. If a rotation touch gesture is detected in the predetermined areas, such as edge areas of the screen, when the information object is displayed on the screen, then the control unit 300 determines the reference line for bisecting the information at the position where the rotation touch gesture is detected. In the latter case, if the rotation touch gesture is detected when the information object is displayed on the screen, the control unit 300 may set the reference line at the position where the rotation touch gesture is detected. Although the reference line is set at the position where the rotation touch gesture is detected, the bisection reference line may be set at a specific position on the screen of the display unit 330 in association with the rotation touch gesture.

The folding scroll method according to various embodiments of the disclosure is implemented, when a rotation touch gesture is made in the counter-clockwise direction around the reference line, i.e., on or below the bisection reference line, by folding the information items arranged below the reference line into pleats towards the reference line, and, when a rotation touch gesture is made in the clockwise direction around the reference line, i.e., on or above the bisection reference line, by folding the information items arranged above the reference line into pleats towards the reference line. At this time, the information items are folded such that the information items closest to the reference line are folded first. If a rotation touch gesture is made in the direction away from the direction of the previous rotation touch gesture when some information items of the information object have been folded, the folded information items are unfolded in order to stretch them out. That is, if a clockwise rotation touch gesture is made in the middle of or after performing the folding scroll with the counter-clockwise rotation touch gesture, then the information items folded below the reference line are unfolded so as to be stretched out. If a counter-clockwise rotation touch gesture is made in the middle of or after performing the folding scroll with the clockwise rotation touch gesture, then the information items folded above the reference line are unfolded so as to be stretched out. At this time, the folded information items are unfolded so that the last-folded information item is unfolded first. The folded information items may be displayed with a visual effect of folded pleats, overlaid bars, or an icon indicating that information items are folded. The folding and unfolding speed of the information items may be determined according to the size and/or speed of the rotation touch gesture. That is, the scroll or folding speed of the information items may be configured to be in proportion to the size or speed of the rotation touch gesture.

FIG. 13 is a flowchart illustrating a procedure of folding information items in response to a multi-touch gesture in an information display method according to various embodiments.

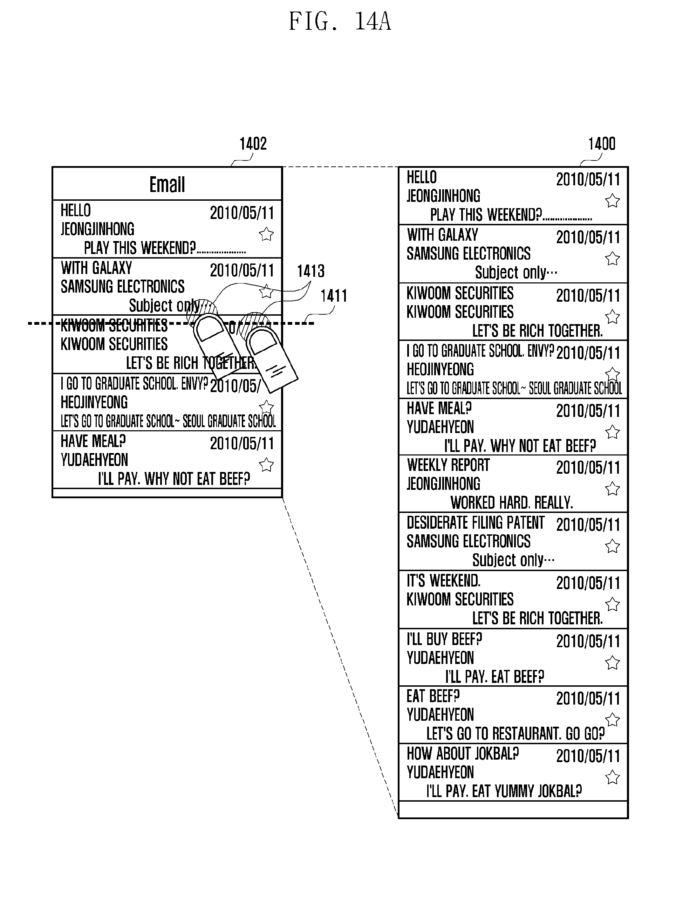

Referring to FIGS. 6B, 13, and 14A to 14D, the multi-touch gesture is defined as a touch gesture made with at least two touch points as shown in FIG. 6B. FIGS. 14A to 14D, which are diagrams illustrating exemplary information objects for explaining folding and unfolding operations in the procedure of FIG. 13 according to various embodiments.

Referring to FIGS. 13 and 14A to 14D, the control unit 300 controls the display unit 330 to display the information object at operation 1311. If a multi-touch is made in this state, then the control unit 300 detects the multi-touch at operation 1313, then determines the touch points of the multi-touch at operation 1315, and then sets a reference line for folding the information object base on the touch points at operation 1317. For example, as shown in screen 1402, if the information object 1400 grows in size, it may not be possible to display the entire information object 1400 on the screen of the display unit 330 at one time. In this case, the control unit 300 controls a part of the information object 1400 to be displayed on the screen of the display unit 330, as shown in the screen 1402, at operation 1311. If a touch gesture is made as denoted by reference number 1413 in this state, then the control unit 200 determines whether the touch gesture is a double-touch gesture, i.e., a folding touch, for setting a reference line 1411 bisecting the information object at operation 1313, and then, if the touch gesture is determined as the multi-touch gesture, determines the touch points at operation 1315, and sets the reference line 1411 crossing the touch points at operation 1317. At this time, the reference line 1411 can be presented explicitly on the screen of the display unit 330.

In various embodiments of the disclosure, if a multi-touch having at least two touch points is detected in a state where the information object is displayed on the screen of the display unit 330, as shown in FIG. 14A, then the control unit draws a reference line 1411, such as a bisection line, for folding the information object according to the touch points. If a scroll input is made after setting the reference line, then the control unit 300 determines this input as a folding scroll input. At this time, the scroll input may be made in the form of a linear scroll gesture having a horizontal or vertical scroll direction. That is, if the reference line 1411 is drawn horizontally, then the scroll gesture may be in vertical direction. However, if the reference line 1411 is drawn vertically, then the scroll may be in horizontal direction. The control unit 300 performs the folding scroll of the information object in a direction towards the reference line according to the direction of the scroll gesture. FIG. 14A shows an exemplary situation where the multi-touch is made with two touch points aligned horizontally such that the reference line 1411 is drawn in the horizontal direction on the screen of the display unit 330.

If a scroll gesture is made in the above state, then the control unit 300 detects this at operation 1319, then determines the scroll gesture direction and speed at operation 1321, and determines whether the scroll gesture is made in the direction towards the reference line at operation 1323. If the scroll direction is not made in the direction towards the reference line, then, at operation 1327, then the information object is scrolled and unfolded at the detected speed. If the scroll gesture is made in the direction to the reference line, the control unit 300 detects this at operation 1323 and scrolls the information object at the determined speed such that the information object is folded towards the reference line at operation 1325. If the scroll gesture is made in the direction away from the reference line, then the control unit 300 scrolls the information object at the determined speed in the direction away from the reference line such that the folded part of the information object stretches out. If there is no scroll gesture detected at operation 1319, then it may be determined that the procedure is ended at operation 1331.

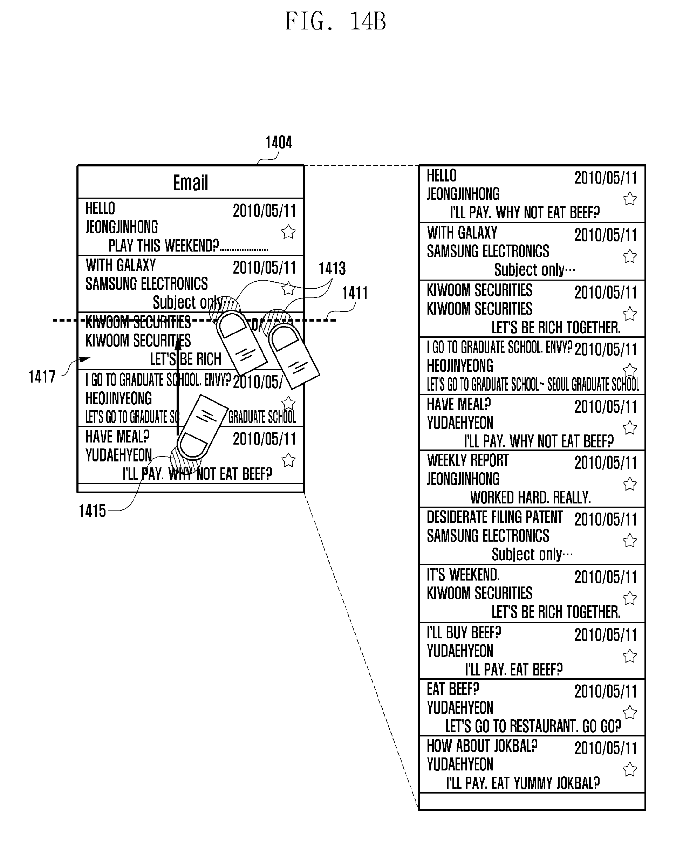

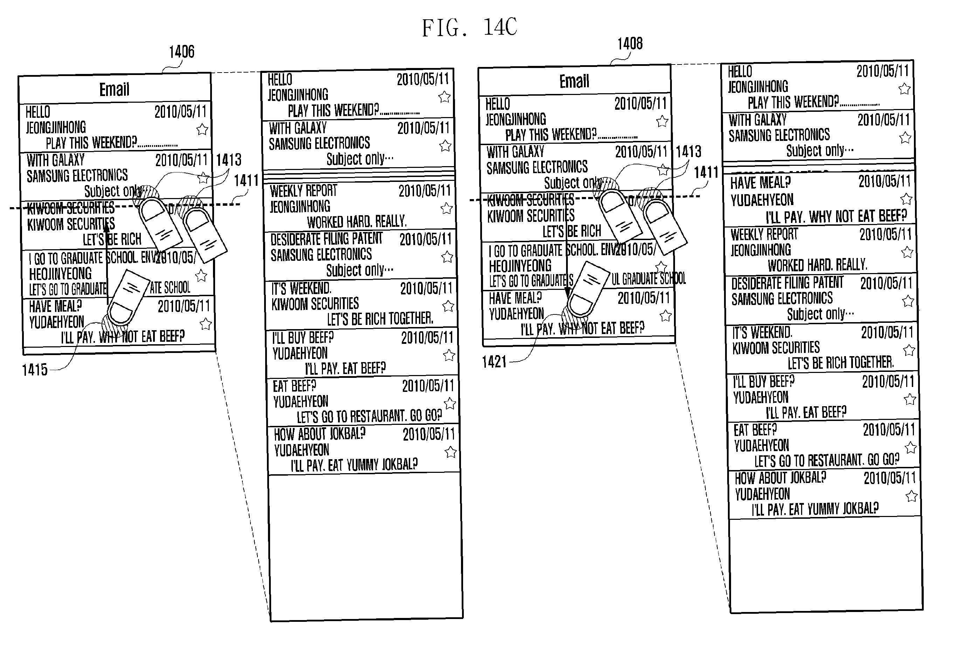

In a case where the reference line 1411 is set across a screen 1404 of the display unit 330 horizontally, as shown in FIG. 14B, if a touch gesture 1415 is made below the reference line and then an upward scroll gesture is made towards the reference line 1411 subsequently, then the control unit 300 determines the scroll gesture direction and speed at operation 1321, determines that the scroll gesture is made in the direction towards the reference line 1411, at operation 1323, and then scrolls the information object 1400 in the upward direction towards the reference line 1411 such that a part 1417 of the information object is folded to the reference line. As shown in FIG. 14B, if the information object is pushed in the direction towards the reference line 1411, the information item 1417 closest to the reference line 1411 is folded in different presentation pattern, such that the second closest information item to the reference line moves towards the reference line by as much space as the space emptied by the folding of the first closest information item 1417 towards the reference line 1411. If the upward scroll gesture continues in the above state, then the control unit 300 keeps scrolling the information object upwards in the direction towards the reference line 1411, as shown in a screen 1406 of FIG. 14C such that the subsequent information items are moved upward and folded towards the reference line.

If the direction of the scroll gesture is changed in the middle of or after folding the information object to the reference line, i.e., the direction is change from the direction towards the reference line to the direction away from the reference line, as denoted by reference number 1421 of FIG. 14C, then the control unit 300 detects this at operation 1323 and scrolls down the folded information items to stretch out in the direction away from the reference line.

As above described, FIGS. 14B to 14C show the operations of folding the information items in response to the upward scroll gesture in the direction towards the reference line 1411 and unfolding the folded information items in response to the downward scroll gesture in the direction against the reference line 1411. In detail, if a scroll gesture is made below the reference line in the direction towards the reference line 1411, as shown in FIG. 14B, the control unit 300 may scroll the information object displayed on the screen of the display unit 330 so as to fold the information items in the direction towards the reference line 1411. At this time, the information items may be displayed with a visual effect of folded pleats. If a downward scroll gesture is made in the direction away from the folding scroll direction, as shown in the screen 1408 of FIG. 14C, in the state where the information items have been folded as shown in the screen 1406 of FIG. 14C, then the control unit 300 unfolds the folded information items in the direction away from the reference line such that the folded information items stretch out at a speed in proportional to the downward scroll gesture speed.

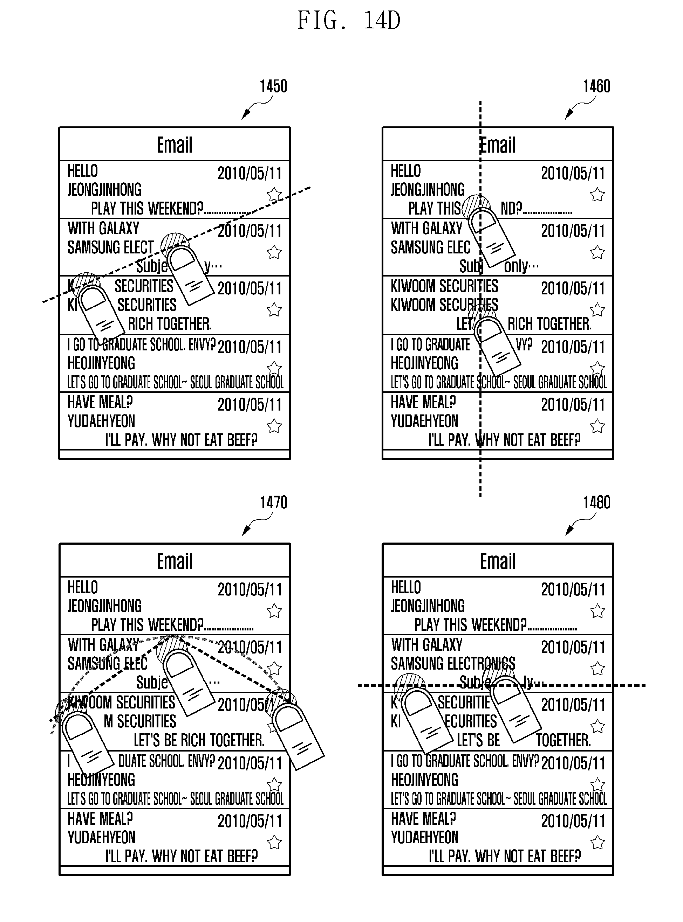

Referring to FIG. 14D, which is a diagram illustrating exemplary screen images for explaining the procedure of setting a reference line with a multi-touch gesture according to various embodiments of the disclosure, a case of a multi-touch gesture is shown. In the case where the multi-touch gesture is made on a screen 1450, the reference line may be drawn diagonally in order to cross the touch points of the multi-touch, and may be drawn vertically as shown in the screen 1460, may be drawn so as to be curved, as shown in a screen 1470, and may be drawn horizontally, as shown in the screen image 1408 with or without a bent point according to the number and positions of touch points.

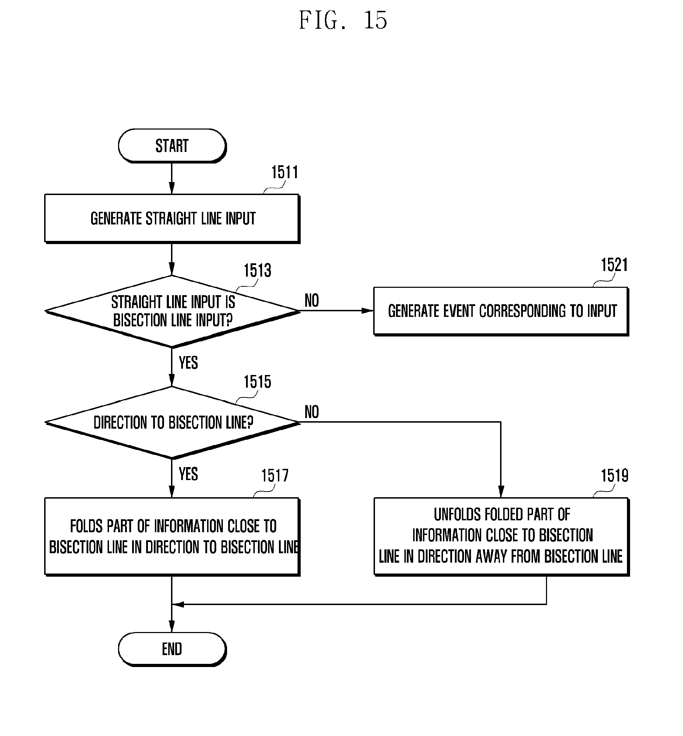

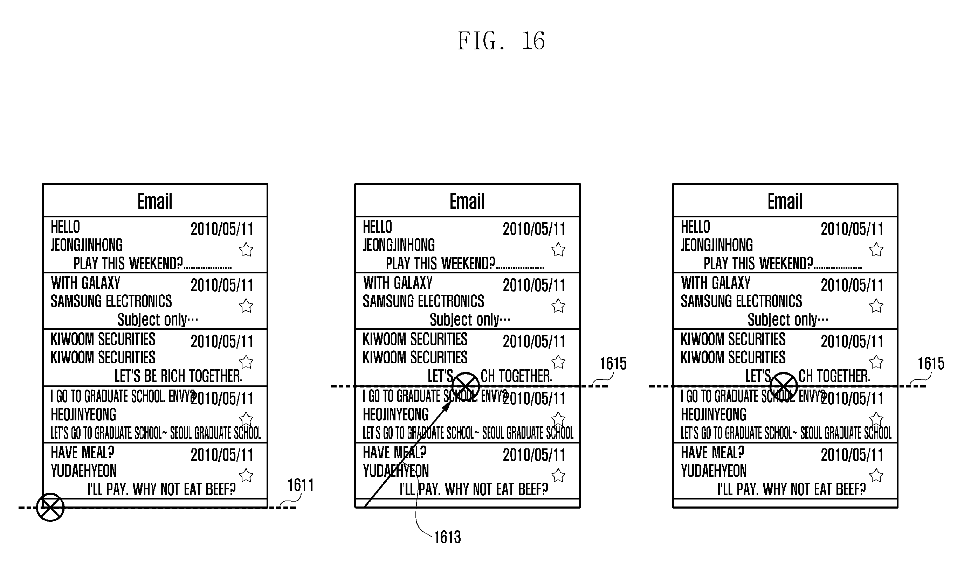

FIG. 15 is a flowchart illustrating a procedure of folding an information object in response to a straight line gesture in a user device according to various embodiments. FIG. 16 is a diagram illustrating exemplary screen images for explaining operations of setting a reference line through the procedure of FIG. 15 according to various embodiments.

Referring to FIGS. 15 and 16, the straight gesture is made to set a reference line in order to generate a line object at a specific position on the screen displaying an information object and moving the line object to an intended position so as to be set as the reference line. If the user makes a gesture drawing a straight line on the screen display the information object, the control unit 300 detects the gesture and generates a straight line input at operation 1511 and, if the user moves the straight line to a certain position on the screen of the display unit 330, the control unit 300 then determines whether the straight line is positioned on a certain information item by determining if the straight line input is a bisection line input at operation 1513. That is, if the straight line is dragged onto a certain information item, the control unit 300 determines this as the input of for setting a reference line and sets the reference line at the corresponding position. If it is determined that the straight line input is not a bisection line input at operation 1513, then the control unit 300 generates an event corresponding to the input at operation 1521.

Afterwards, the control unit 300 monitors to detect a folding scroll input and, if a folding scroll input is detected, then at operation 1515, the control unit 300 may determine whether the folding scroll input is made in a direction to the bisection line. If the folding scroll input is made in a direction towards the bisection line, then the control unit 300 detects this at operation 1515 and scrolls the information object such that the information items near the reference line are folded towards the reference line at operation 1517. If the scroll gesture is made in a direction away from the reference line, the control unit 300 detects this at operation 1515 and scrolls the information object in a direction away from the reference line such that the folded items are unfolded to stretch out in the direction away from the reference line at operation 1519.

In a case of folding and unfolding the information object through the procedure of FIG. 15, the bisection line may be set by drawing a straight line. If the user generates a digital object 1611 for setting at least one bisection line on the screen of the display unit as shown in FIG. 16, then the control unit 300 may detect this at operation 1511 and, if the digital object 1611 is dragged to a certain position on the screen of the display unit 330 as denoted by the arrow 1613, then the control unit 300 may set the bisection line 1615, which is also referred to as the reference line, at operation 1513. The digital object 1611 may be moved to a certain area, e.g., a display area for display information, other than the edge of the screen and, in this case, the control unit 300 may set the bisection line 1615 at a position where the digital object is placed.

Afterwards, the information object may be folded or unfolded according to the folding scroll input. In a case where the bisection line is set across the screen horizontally, the folding scroll function is feasible with the scroll gesture in vertical direction and/or rotation touch gesture. In a case of using the vertical scroll gesture, the control unit 300 folds or unfolds the information object through steps 1515 to 1519 in the same manner as steps 1319 to 1327 of FIG. 13. In a case of using the rotation touch gesture, the control unit 300 may fold or unfold the information object through steps 1515 to 1519, in the same manner as described with respect to steps 919 to 926 of FIG. 9. As described above, the terminal apparatus may set the bisection line and fold and unfold the information object using the folding touch and/or folding scroll in combination with other touch gestures.

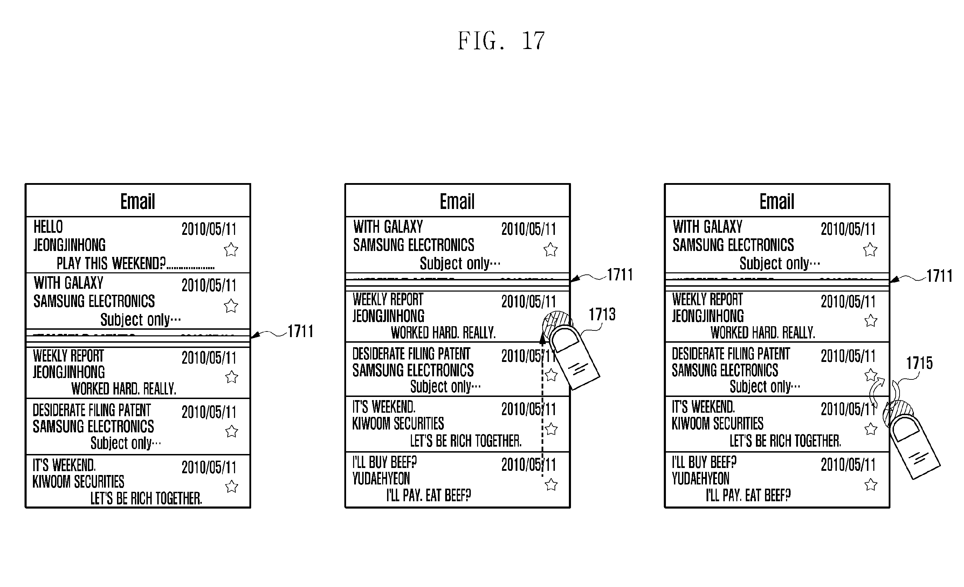

FIG. 17 is a diagram illustrating exemplary screen images for explaining a procedure of folding and unfolding information object using a linear scroll or rotation touch gesture in a user device according to various embodiments.

Referring to FIG. 17, the user may make a vertical scroll gesture as denoted by reference number 1713, when the information object is bisected to be folded around a reference line 1711, in order to fold or unfold the information object. Also, the user may set another reference line by making a rotation touch gesture at the same position where the former bisection line has been generated, as denoted by reference number 1715. The reference line 1711 for bisecting the information object may be made in order to make a rotation touch gesture as described with reference to FIG. 9, make a multi-touch gesture as described with reference to FIG. 13, or make the straight line gesture as described with reference o FIG. 15.

After setting the reference line through one of the aforementioned methods, it is possible to scroll the information object with the folding effect at a part of the information object as denoted by reference number 1711. If a folding scroll input is made when the information objected is folded, as denoted by reference number 1711, then the information object may be scrolled while maintaining the folded state. That is, the control unit 300 may set the bisection line 1711 in response to the rotation touch gesture and then fold and/or unfold the information object in response to a vertical scroll gesture as denoted by reference number 1713 or by setting the bisection line 1711 in response to the multi-touch gesture and then folding and/or unfolding the information object in response to a scroll gesture, as denoted by reference number 1713. The vertical scroll gesture may be substituted by a rotation touch gesture in order to trigger the same operation.

After the information object is folded or unfolded, the user may set a new reference line on the screen of the display unit 330 in order to search for another information item. In this case, the user may make a rotation touch gesture as denoted by reference number 1715 or a multi-touch gesture. The control unit 300 may detect the user input by means of the touch panel 340 and may set the reference line at the corresponding position.

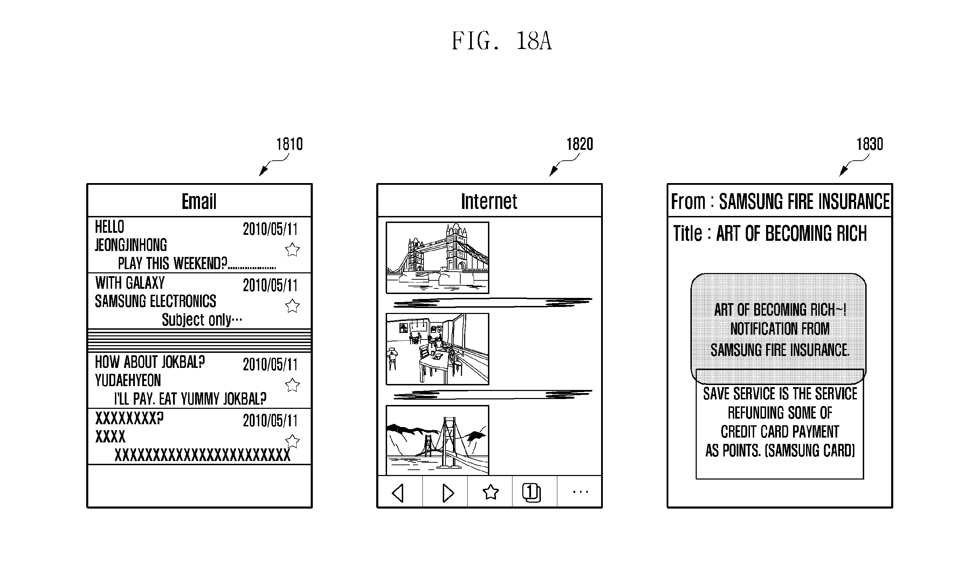

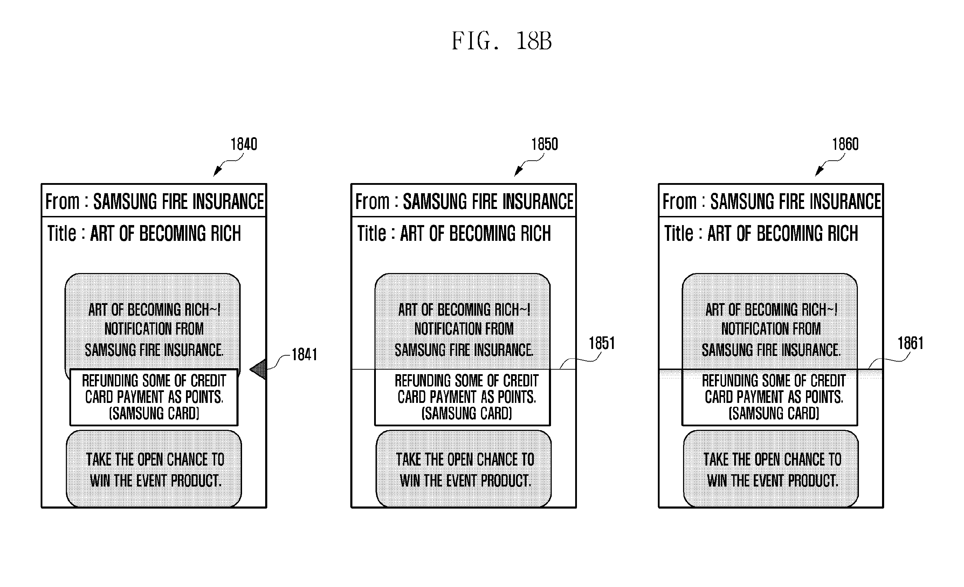

FIGS. 18A and 18B are diagrams illustrating screen images for explaining visual effects indicating a folded part of an information object in a user device according to various embodiments.

Referring to FIGS. 18A and 18B, the folding image display method according to various embodiments of the disclosure bisects the information object composed of a plurality of information items into two parts as shown in a screen 1810. In a case where the information object is divided into first and second parts, as shown in the screen image 1810, the control unit 300 may shrink the information items of the second part that are below the first part with a visual effect of folded pleats in response to a folding scroll input. The folded information items are also may be displayed with a visual effect of overlaid bars.

As shown in a screen 1820, the folding image display method according to various embodiments of the disclosure may divide the information object into first and second parts and may fold the information items of the second part below the first part. In this case, the folded part is expressed in the form of a crumpled document in a direction towards the reference line, as shown in the screen 1820.

As shown in a screen 1830, the folding image display method according to various embodiments of the disclosure may divide an electronic document displayed on the screen into first and second parts and may tuck the second part under the first part such that the a section of the second part disappears from the screen of the display unit 330 with a visual effect in which the first part of the information object is partially overlaid over the second part.

As shown in a screen 1840 of FIG. 18B, the folding image display method according to various embodiments of the disclosure may divide an electronic document into first and second parts with a bisection line drawn across the screen and may tuck the second part under the first part such that the information items around the bisection line disappears from the screen of the display unit 330 with a visual effect of folded mark such as icon indicating the existence of the bisection line as denoted by reference number 1841.

As shown in a screen 1850, the folding image display method according to various embodiments of the disclosure may divide an electronic document into first and second parts with a bisection line drawn across the screen and may tuck the second part under the first part such that the information items around the bisection line disappears from the screen with a mark indicating the existence of the bisection line as denoted by reference number 1851.

As shown in a screen 1860, the folding image display method according to various embodiments of the disclosure may divide an electronic document into first and second parts and may tuck the second part under the first part such that the information item around the bisection line disappears from the screen of the display unit with a folding mark expressing the second part slide off below the first part at the bisection line as denoted by reference number 1861.

The information object folding and unfolding methods described with reference to FIGS. 9, 13, and 15 may be implemented by scrolling the information object in order to fold the information object in a direction towards the reference line or to unfold the information object in a direction against towards the reference line in response to a scroll gesture. However, it is also possible to search for the information items using the identifiers assigned to the information items.

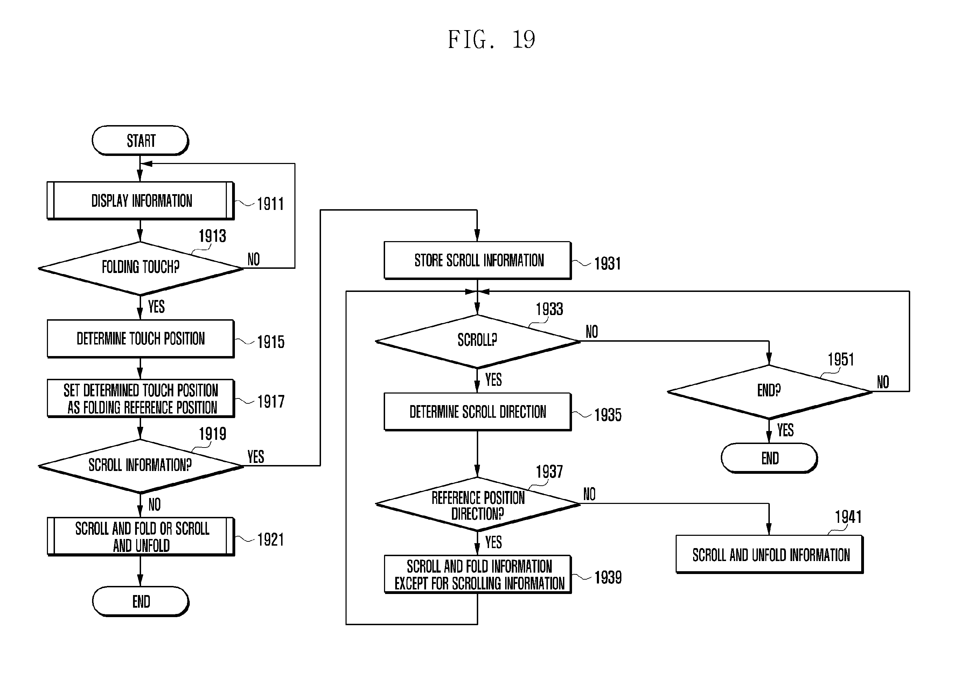

FIG. 19 is a flowchart illustrating a procedure of assigning identifiers to information items and information object to navigate and display information items corresponding to the identifiers in a user device according to various embodiments.

Referring to FIG. 19, the control unit 300 may display an information object on the screen of the display unit 330 at operation 1911. As described above, the information object may be any data processed and displayed by the user device such as electronic document, messenger data, electronic book, email data, a list object, such as a call log list, a text message list, an email list, a messenger message list, a still picture list, a music file list, a motion picture list, or any other similar list, an Internet log history, or any other similar information and/or data. Here, the information such as the messenger data and the email data may have subscriber information. In this case, it is possible to perform the information folding and unfolding operations in association with the subscriber information of the subscribers. That is, if the user intends to determine or view the information items associated with a specific subscriber, it is possible to navigate the information items associated with the specific subscriber while folding the information items associated with other subscribers. In this case, if a fording touch gesture is detected, the control unit 300 may set the reference line to fold the information object and configures the scroll information including subscriber identifiers for folding scroll function. Afterward, it is possible to navigate the information items sorted by subscriber identifier in response to a scroll gesture.

If a folding touch input is made by the user in the state that the information object is displayed on the screen at operation 1911, then the control unit 300 may detect this at operation 1913, and then, in operation 1915, may determine the folding touch position, and then, in operation 1917, may set the reference line at the folding touch position, or in other words, may set the determined touch position as the folding reference position in operation 1917. At this time, the folding touch may be a rotation touch gesture, a multi-touch gesture, or a straight line gesture. If no scroll information is input at operation 1919, then the control unit 300 folds or unfolds the information object according to the folding scroll input in operation 1921. The information folding and unfolding operations may be performed as described with reference to FIGS. 9, 13, and 15.

If the scroll information is input at operation 1919, then the control unit 300 stores the scroll information at operation 1931. At this time, the scroll information may be a keyword of the subscriber identity information, e.g., a subscriber phone number, an email address, a Simple Notification Service (SNS) subscriber identifier, an electronic document, such as an ebook, a document file, or any other similar and/or suitable type of information. After storing the scroll information, if the user makes a folding scroll input on the screen, the control unit 300 may detect the folding scroll input at operation 1933 and, at operation 1935, determines the direction of the folding scroll input at operation 1935. If the scroll gesture is made in a direction towards the reference line, then the control unit 300 detects this at operation 1937 and, at operation 1939, scrolls the information object such that the information items, except for those associated with the scroll information, are folded.

That is, the control unit 300 may folds the information items, other than the information items identified by the scroll information, such that only the information items sorted by a subscriber identifier are displayed. For example, if the identifier of a specific messenger service subscriber is configured as the scroll information, then the control unit 300 may scroll the information object, may fold the information items identified by subscriber identifiers other than the target subscriber identifier, such that only the messenger message items identified by the target subscriber identifier are displayed on the screen of the display unit 300. If the folding scroll input is made in a direction away from the reference line, i.e., the scroll gesture is made in the direction adverse to the reference line, then the control unit 300 detects this at operation 1937 and unfolds the folded information items so as to stretch out at operation 1941. Furthermore, if the control unit 300 does not detect the folding scroll input at operation 1933, then it may be determined, at operation 1951, if the procedure is ended.

As described above, the user device according to various embodiments of the disclosure may configure specific areas, such as edges of a screen of this display unit 300, for receiving a bisection line setting input on the screen of the display unit 300, may bisect the information object displayed on the screen by drawing a bisecting line across the screen in response to a bisection setting input, and may fold or unfold the information object in a direction towards or away from the bisection line according to a scroll input. At this time, if the scroll input for scrolling the information object is detected when the information object is divided, the information object may be scrolled in the direction towards the bisection line in a manner proportional to the scroll gesture speed. Accordingly, even when the information object is too large to be displayed on the screen at one time, the terminal equipment, according to various embodiments of the disclosure, may display the information items distributed distantly by shrinking, i.e., not displaying, the unwanted information items.

As described above, the information display apparatus and method of various embodiments of the disclosure may simultaneously display distantly distributed information items of a document or an information object larger than the screen size on the screen by shrinking an unnecessary part of the document or information object between the target information items.

Also, the information display apparatus and method of various embodiments of the disclosure may facilitate navigation of a document or an information object larger than the screen size by shrinking an unwanted part of the document or information object, thereby displaying the distantly distributed information items with each other on the screen.

While the invention has been shown and described with reference to certain embodiments thereof, it will be understood by those skilled in the art that various changes in form and details may be made therein without departing from the spirit and scope of the invention as defined by the appended claims and their equivalents.

## Claims

1. An information display method of a terminal, the method comprising:
displaying information;
detecting a folding touch input;
setting and displaying a reference position where the folding touch is detected; and
folding the information in a direction towards the reference position while scrolling in response to a folding scroll input.

2. The method of claim 1, further comprising unfolding the folded information in response to a folding scroll input made in a direction away from the reference position.

3. The method of any of claims 1 and 2, wherein the folding touch input is a rotation touch gesture, and
wherein the setting and the displaying of the reference position comprises:
setting a position where the rotation touch gesture is detected as the reference position; and
displaying a bisection line at the reference position.

4. The method of any of claims 2 and 3, wherein the folding scroll input is a rotation touch gesture, and folding the information comprises:
folding, when the rotation touch gesture is directed towards the reference position, the displayed information in a direction towards the reference position; and
unfolding, when the rotation touch gesture is directed away from the reference position, the folded information in a direction away from the reference position.

5. The method of any of claims 3 and 4, wherein the rotation touch gesture is detected at edge areas of a screen displaying the information.

6. The method of claim 5, further comprising detecting the rotation touch, wherein the detecting of the rotation touch comprises:
drawing, when the rotation touch starts moving, a virtual line around a touch position;
drawing, when a curve generates two crossing points with the virtual line, another virtual line crossing the former virtual line between the two crossing points; and
determining, when two crossing points are detected on each virtual line, that an input of the rotation touch has occurred.

7. The method of any of claims 1 and 2, wherein the folding touch input is a multi-touch gesture, and
wherein the setting and the displaying of the reference position comprises drawing a bisection line crossing touch points of the multi-touch gesture and setting the bisection line at the reference position.

8. The method of any of claims 2 and 7, wherein the folding scroll input is at least one of a horizontal scroll gesture and vertical scroll gesture,
wherein the folding of the information comprises scrolling and folding, when the scroll touch gesture is generated in a direction towards the reference position, the displayed information in the direction towards the reference position, and
wherein the unfolding of the folded information comprises scrolling and unfolding, when the scroll touch gesture is generated in a direction away from the reference position, the folded information in the direction away from the reference position.

9. An information display apparatus of a terminal, the apparatus comprising:
a display unit configured to display information;
a touch panel configured to detect a folding touch input and a folding scroll input; and
a control unit configured to set and display a reference position where the folding touch input is detected when the information is displayed on the display unit, and fold the information in a direction towards the reference position while scrolling in response to the folding scroll input.

10. The apparatus of claim 9, wherein the control unit is configured to unfold the folded information in response to a scroll gesture made in a direction away from the reference position.

11. The apparatus of any of claims 9 and 10, wherein the control unit is configured to set, when a rotation touch gesture is input through an input unit when the information is displayed, a position where the rotation touch gesture is detected as the reference position and displays a bisection line at the reference position.

12. The apparatus of any of claims 10 and 11, wherein the folding scroll input is a rotation touch gesture, and
wherein the control unit is configured to fold, when the rotation touch gesture is directed towards the reference position, the displayed information in a direction towards the reference position and unfold, when the rotation touch gesture is directed away from the reference position, the folded information in a direction away from the reference position.

13. The apparatus of any of claims 11 and 12, wherein the control unit is configured to determine a rotation touch gesture detected at an edge area of a screen displaying the information as the folding touch input.

14. The apparatus of any of claims 9 and 10, wherein the control unit is configured to draw, when a multi-touch gesture is input through an input unit when the information is displayed, a bisection line crossing touch points of the multi-touch gesture and set the bisection line at the reference position.

15. The apparatus of any of claims 9 and 13, wherein the folding scroll input is at least one of a horizontal scroll gesture and a vertical scroll gesture, and
wherein the control unit is configured to scroll and fold, when the scroll touch gesture is generated in a direction towards the reference position, the displayed information in the direction towards the reference position, and
wherein the control unit is configured to scroll and unfold, when the scroll touch gesture is generated in a direction away from the reference position, the folded information in the direction away from the reference position.
